# EUROPEAN PATENT SPECIFICATION

(11) **EP 3 562 918 B1**
(45) Date of publication and mention of the grant of the patent: **24.02.2021**
(21) Application number: 17735340.6
(22) Date of filing: 23.06.2017
(51) Int. Cl.: C10G 65/00, C10G 67/00, C10G 67/04, C08L 95/00, C10G 1/08, C10G 21/14, C10G 45/38, C10G 65/12, C10M 101/02, C10M 171/02, C10N 20/00, C10N 20/02, C10N 30/20, C10N 40/25, C10N 70/00

(54) **BLOCK PROCESSING WITH BULK CATALYSTS FOR BASE STOCK PRODUCTION FROM DEASPHALTED OIL**
BLOCKVERARBEITUNG MIT MASSENKATALYSATOREN ZUR GRUNDSTOFFPRODUKTION AUS ENTASPHALTIERTEM ÖL
TRAITEMENT DE BLOC AVEC DES CATALYSEURS EN MASSE POUR LA PRODUCTION D'HUILE DE BASE À PARTIR D'HUILE DÉSASPHALTÉE

(30) Priority: 29.12.2016 US 201662439943 P
(43) Date of publication of application: 06.11.2019
(73) Proprietor: ExxonMobil Research and Engineering Company, Annandale, NJ 08801-0900 (US)
(72) Inventor: FRUCHEY, Kendall, S., Humble TX 77346-3946 (US); CARROLL, Michael, B., Center Valley PA 18034 (US); HILBERT, Timothy, L., Meddleburg VA 20117 (US); GREEN, Sara Katherine, Houston, Texas 77019 (US); LEVIN, Doron, Highland Park NJ 08904 (US)
(74) Representative: ExxonMobil Chemical Europe Inc.
(86) International application number: PCT/US2017/039012
(87) International publication number: WO 2018/125282

(56) References cited:
- KR-A- 20030 073 026
- US-A1- 2007 175 794
- US-A1- 2016 194 566

## Description

### FIELD

The invention relates to the production of lubricant oil base stocks from deasphalted oils produced by low severity deasphalting of resid fractions.

### BACKGROUND

Lubricant base stocks are one of the higher value products that can be generated from a crude oil or crude oil fraction. The ability to generate lubricant base stocks of a desired quality is often constrained by the availability of a suitable feedstock. For example, most conventional processes for lubricant base stock production involve starting with a crude fraction that has not been previously processed under severe conditions, such as a virgin gas oil fraction from a crude with moderate to low levels of initial sulfur content.

In some situations, a deasphalted oil formed by propane desaphalting of a vacuum resid can be used for additional lubricant base stock production. Deasphalted oils can potentially be suitable for production of heavier base stocks, such as bright stocks. However, the severity of propane deasphalting required in order to make a suitable feed for lubricant base stock production typically results in a yield of only about 30 wt% deasphalted oil relative to the vacuum resid feed.

U.S. Patent 3,414,506 describes methods for making lubricating oils by hydrotreating pentane-alcohol-deasphalted short residue. The methods include performing deasphalting on a vacuum resid fraction with a deasphalting solvent comprising a mixture of an alkane, such as pentane, and one or more short chain alcohols, such as methanol and isopropyl alcohol. The deasphalted oil is then hydrotreated, followed by solvent extraction to perform sufficient VI uplift to form lubricating oils.

U.S. Patent 7,776,206 describes methods for catalytically processing resids and/or deasphalted oils to form bright stock. A resid-derived stream, such as a deasphalted oil, is hydroprocessed to reduce the sulfur content to less than 1 wt% and reduce the nitrogen content to less than 0.5 wt%. The hydroprocessed stream is then fractionated to form a heavier fraction and a lighter fraction at a cut point between 1150°F - 1300°F (620°C - 705°C). The lighter fraction is then catalytically processed in various manners to form a bright stock.

US 2007/175794 A1 discloses a process to continuously prepare two or more base oil grades and middle distillates.

### SUMMARY

The invention is a method for making lubricant base stock according to claim 1, and the use of a mixed metal catalyst composition for making lubricant base stock according to claim 11.

In various aspects, systems and methods are provided for block operation during lubricant and/or fuels production from deasphalted oil, such as deasphalted oil from a solvent deasphalting process with a yield of deasphalted oil of at least 50 wt%. During "block" operation, a deaspahlted oil and/or the hydroprocessed effluent from an initial processing stage can be split into a plurality of fractions. The fractions can correspond, for example, to feed fractions suitable for forming a light neutral fraction, a heavy neutral fraction, and a bright stock fraction, or the plurality of fractions can correspond to any other convenient split into separate fractions. The plurality of separate fractions can then be processed separately in the process train (or in the sweet portion of the process train) for forming fuels and/or lubricant base stocks. The initial stage can optionally include a bulk hydrotreating catalyst to assist with increasing the space velocity in the initial stage.

### BRIEF DESCRIPTION OF THE DRAWINGS

FIG. 1 schematically shows an example of a configuration for block catalytic processing of deasphalted oil to form lubricant base stocks.
FIG. 2 schematically shows an example of a configuration for block catalytic processing of deasphalted oil to form lubricant base stocks.
FIG. 3 schematically shows an example of a configuration for block catalytic processing of deasphalted oil to form lubricant base stocks.
FIG. 4 shows results from processing a pentane deasphalted oil at various levels of hydroprocessing severity.
FIG. 5 shows results from processing deasphalted oil in configurations with various combinations of sour hydrocracking and sweet hydrocracking.
FIG. 6 schematically shows an example of a configuration for catalytic processing of a deasphalted oil to form lubricant base stocks.
FIG. 7 schematically shows an example of a configuration for block catalytic processing of deasphalted oil to form lubricant base stocks.

### DETAILED DESCRIPTION

All numerical values within the detailed description and the claims herein are modified by "about" or "approximately" the indicated value, and take into account experimental error and variations that would be expected by a person having ordinary skill in the art.

### Overview

In various aspects, methods are provided for producing Group I and Group II lubricant base stocks, including Group I and Group II bright stock, from deasphalted oils generated by low severity C₄₊ deasphalting. Low severity deasphalting as used herein refers to deasphalting under conditions that result in a high yield of deasphalted oil (and/or a reduced amount of rejected asphalt or rock), such as a deasphalted oil yield of at least 50 wt% relative to the feed to deasphalting, or at least 55 wt%, or at least 60 wt%, or at least 65 wt%, or at least 70 wt%, or at least 75 wt%. In contrast with conventional bright stock produced from deasphalted oil formed at low severity conditions, the Group I and Group II bright stock described herein can be substantially free from haze after storage for extended periods of time. This haze free Group II bright stock can correspond to a bright stock with an unexpected composition.

In various additional aspects, methods are provided for catalytic processing of C₃ deasphalted oils to form Group II bright stock. Forming Group II bright stock by catalytic processing can provide a bright stock with unexpected compositional properties.

In some conventional processing schemes, a resid fraction can be deasphalted, with the deasphalted oil used as part of a feed for forming lubricant base stocks. In conventional processing schemes a deasphalted oil used as feed for forming lubricant base stocks is produced using propane deasphalting. This propane deasphalting corresponds to a "high severity" deasphalting, as indicated by a typical yield of deasphalted oil of roughly 40 wt% or less, and often 30 wt% or less, relative to the initial resid fraction. In a typical lubricant base stock production process, the deasphalted oil can then be solvent extracted to reduce the aromatics content, followed by solvent dewaxing to form a base stock. The low yield of deasphalted oil is based in part on the inability of conventional methods to produce lubricant base stocks from lower severity deasphalting that do not form haze over time.

In some aspects, it has been discovered that lubricant base stocks can be produced from deasphalted oil generated at high lift (i.e., high yield of deasphalted oil) while also producing base stocks that have little or no tendency to form haze over extended periods of time. The deasphalted oil can be produced by deasphalting process that uses a C₄ solvent, a C₅ solvent, a C₆₊ solvent, a mixture of two or more C₄₊ solvents, or a mixture of two or more C₅₊ solvents. The deasphalting process can further correspond to a process with a yield of deasphalted oil of at least 50 wt% for a vacuum resid feed having a T10 distillation point (or optionally a T5 distillation point) of at least 510°C, or a yield of at least 60 wt%, or at least 65 wt%, or at least 70 wt%. It is believed that the reduced haze formation is due in part to the reduced or minimized differential between the pour point and the cloud point for the base stocks and/or due in part to forming a bright stock with a cloud point of -5°C or less.

In some aspects a deasphalted oil can be hydroprocessed (hydrotreated and/or hydrocracked and/or demetallated), so that ∼700°F+ (370°C+) conversion is 10 wt% to 40 wt%. The hydroprocessed effluent can be fractionated to separate lower boiling portions from a lubricant base stock boiling range portion. The lubricant boiling range portion can then be hydrocracked, dewaxed, and hydrofinished to produce a catalytically dewaxed effluent. Optionally but preferably, the lubricant boiling range portion can be underdewaxed, so that the wax content of the catalytically dewaxed heavier portion or potential bright stock portion of the effluent is at least 6 wt%, or at least 8 wt%, or at least 10 wt%. This underdewaxing can also be suitable for forming light or medium or heavy neutral lubricant base stocks that do not require further solvent upgrading to form haze free base stocks. In this discussion, the heavier portion / potential bright stock portion can roughly correspond to a 538°C+ portion of the dewaxed effluent. The catalytically dewaxed heavier portion of the effluent can then be solvent dewaxed to form a solvent dewaxed effluent. The solvent dewaxed effluent can be separated to form a plurality of base stocks with a reduced tendency (such as no tendency) to form haze over time, including at least a portion of a Group II bright stock product.

In other aspects a deasphalted oil can be hydroprocessed (hydrotreated and/or hydrocracked and/or demetallated), so that 370°C+ conversion is at least 40 wt%, or at least 50 wt%. The hydroprocessed effluent can be fractionated to separate lower boiling portions from a lubricant base stock boiling range portion. The lubricant base stock boiling range portion can then be hydrocracked, dewaxed, and hydrofinished to produce a catalytically dewaxed effluent. The catalytically dewaxed effluent can then be solvent extracted to form a raffinate. The raffinate can be separated to form a plurality of base stocks with a reduced tendency (such as no tendency) to form haze over time, including at least a portion of a Group I and/or Group II bright stock product.

In other aspects, it has been discovered that catalytic processing can be used to produce Group II bright stock with unexpected compositional properties from C₃, C₄, C₅, and/or C₅₊ deasphalted oil. The deasphalted oil can be hydrotreated to reduce the content of heteroatoms (such as sulfur and nitrogen), followed by catalytic dewaxing under sweet conditions. Optionally, hydrocracking can be included as part of the sour hydrotreatment stage and/or as part of the sweet dewaxing stage.

Optionally, the systems and methods described herein can be used in "block" operation to allow for additional improvements in yield and/or product quality. During "block" operation, a deaspahlted oil and/or the hydroprocessed effluent from the sour processing stage can be split into a plurality of fractions. The fractions can correspond, for example, to feed fractions suitable for forming a light neutral fraction, a heavy neutral fraction, and a bright stock fraction, or the plurality of fractions can correspond to any other convenient split into separate fractions. The plurality of separate fractions can then be processed separately in the process train (or in the sweet portion of the process train) for forming lubricant base stocks. For example, the light neutral portion of the feed can be processed for a period of time, followed by processing of the heavy neutral portion, followed by processing of a bright stock portion. During the time period when one type of fraction is being processed, storage tanks can be used to hold the remaining fractions.

Block operation can allow the processing conditions in the process train to be tailored to each type of lubricant fraction. For example, the amount of sweet processing stage conversion of the heavy neutral fraction can be lower than the amount of sweet processing stage conversion for the light neutral fraction. This can reflect the fact that heavy neutral lubricant base stocks may not need as high a viscosity index as light neutral base stocks. In some aspects, the amount of conversion in the first (sour) stage can be 25 wt% to 75 wt%, or 30 wt% to 70 wt%, or 25 wt% to 60 wt%, or 40 wt% to 75 wt%. After blocking to form separate feeds for production of light neutral base stock, heavy neutral base stock, and bright stock, the amount of second (sweet) stage conversion can vary depending on the desired product. For light neutral production, the amount of second stage conversion can be 15 wt% to 50 wt%. For heavy neutral production, the second stage conversion can be 5 wt% to 25 wt%. For bright stock production, the second stage conversion can be 40 wt% to 70 wt%. Optionally, the amount of conversion for the light neutral can be at least 10 wt% greater than the amount of conversion for the heavy neutral, or at least 15 wt% greater. Optionally, the amount of conversion for the bright stock can be at least 10 wt% greater than the amount of conversion for any light neutral or heavy neutral base stocks derived from blocking of a single feed, or at least 20 wt% greater.

Another option for modifying the production of base stocks can be to recycle a portion of at least one lubricant base stock product for further processing in the process train. This can correspond to recycling a portion of a base stock product for further processing in the sour stage and/or recycling a portion of a base stock product for further processing in the corresponding sweet stage. Optionally, a base stock product can be recycled for further processing in a different phase of block operation, such as recycling light neutral base stock product formed during block processing of the heavy neutral fraction for further processing during block processing of the light neutral fraction. The amount of base stock product recycled can correspond to any convenient amount of a base stock product effluent from the fractionator, such as 1 wt% to 50 wt% of a base stock product effluent, or 1 wt% to 20 wt%.

Recycling a portion of a base stock product effluent can optionally be used while operating a lube processing system at higher than typical levels of fuels conversion. When using a conventional feed for lubricant production, total conversion of feed relative to 370°C can be limited to 65 wt% or less. Conversion of more than 65 wt% of a feed relative to 370°C is typically not favored due to loss of viscosity index with additional conversion. At elevated levels of conversion, the loss of VI with additional conversion is believed to be due to cracking and/or conversion of isoparaffins within a feed. For feeds derived from deasphalted oil, however, the amount of isoparaffins within a feed is lower than a conventional feed. As a result, additional conversion can be performed without loss of VI. In some aspects, converting at least 70 wt% of a feed, or at least 75 wt%, or at least 80 wt% can allow for production of lubricant base stocks with substantially improved cold flow properties while still maintaining the viscosity index of the products at a similar value to the viscosity index at a conventional conversion of 60 wt%.

In various aspects, a variety of combinations of catalytic and/or solvent processing can be used to form lubricant base stocks, including Group II bright stock, from deasphalted oils. These combinations include, but are not limited to:

a) Hydroprocessing of a deasphalted oil under sour conditions (i.e., sulfur content of at least 500 wppm); separation of the hydroprocessed effluent to form at least a lubricant boiling range fraction; and catalytic dewaxing of the lubricant boiling range fraction under sweet conditions (i.e., 500 wppm or less sulfur). The catalytic dewaxing can optionally correspond to catalytic dewaxing using a dewaxing catalyst with a pore size greater than 8.4 Angstroms. Optionally, the sweet processing conditions can further include hydrocracking, noble metal hydrotreatment, and/or hydrofinishing. The optional hydrocracking, noble metal hydrotreatment, and/or hydrofinishing can occur prior to and/or after or after catalytic dewaxing. For example, the order of catalytic processing under sweet processing conditions can be noble metal hydrotreating followed by hydrocracking followed by catalytic dewaxing.

b) The process of a) above, followed by performing an additional separation on at least a portion of the catalytically dewaxed effluent. The additional separation can correspond to solvent dewaxing, solvent extraction (such as solvent extraction with furfural or n-methylpyrollidone), a physical separation such as ultracentrifugation, or a combination thereof.

Group I base stocks or base oils are defined as base stocks with less than 90 wt% saturated molecules and/or at least 0.03 wt% sulfur content. Group I base stocks also have a viscosity index (VI) of at least 80 but less than 120. Group II base stocks or base oils contain at least 90 wt% saturated molecules and less than 0.03 wt% sulfur. Group II base stocks also have a viscosity index of at least 80 but less than 120. Group III base stocks or base oils contain at least 90 wt% saturated molecules and less than 0.03 wt% sulfur, with a viscosity index of at least 120.

In some aspects, a Group III base stock as described herein may correspond to a Group III+ base stock. Although a generally accepted definition is not available, a Group III+ base stock can generally correspond to a base stock that satisfies the requirements for a Group III base stock while also having at least one property that is enhanced relative to a Group III specification. The enhanced property can correspond to, for example, having a viscosity index that is substantially greater than the required specification of 120, such as a Group III base stock having a VI of at least 130, or at least 135, or at least 140. Similarly, in some aspects, a Group II base stock as described herein may correspond to a Group II+ base stock. Although a generally accepted definition is not available, a Group II+ base stock can generally correspond to a base stock that satisfies the requirements for a Group II base stock while also having at least one property that is enhanced relative to a Group II specification. The enhanced property can correspond to, for example, having a viscosity index that is substantially greater than the required specification of 80, such as a Group II base stock having a VI of at least 103, or at least 108, or at least 113.

In the discussion below, a stage can correspond to a single reactor or a plurality of reactors. Optionally, multiple parallel reactors can be used to perform one or more of the processes, or multiple parallel reactors can be used for all processes in a stage. Each stage and/or reactor can include one or more catalyst beds containing hydroprocessing catalyst. Note that a "bed" of catalyst in the discussion below can refer to a partial physical catalyst bed. For example, a catalyst bed within a reactor could be filled partially with a hydrocracking catalyst and partially with a dewaxing catalyst. For convenience in description, even though the two catalysts may be stacked together in a single catalyst bed, the hydrocracking catalyst and dewaxing catalyst can each be referred to conceptually as separate catalyst beds.

In this discussion, conditions may be provided for various types of hydroprocessing of feeds or effluents. Examples of hydroprocessing can include, but are not limited to, one or more of hydrotreating, hydrocracking, catalytic dewaxing, and hydrofinishing / aromatic saturation. Such hydroprocessing conditions can be controlled to have desired values for the conditions (e.g., temperature, pressure, LHSV, treat gas rate) by using at least one controller, such as a plurality of controllers, to control one or more of the hydroprocessing conditions. In some aspects, for a given type of hydroprocessing, at least one controller can be associated with each type of hydroprocessing condition. In some aspects, one or more of the hydroprocessing conditions can be controlled by an associated controller. Examples of structures that can be controlled by a controller can include, but are not limited to, valves that control a flow rate, a pressure, or a combination thereof; heat exchangers and/or heaters that control a temperature; and one or more flow meters and one or more associated valves that control relative flow rates of at least two flows. Such controllers can optionally include a controller feedback loop including at least a processor, a detector for detecting a value of a control variable (e.g., temperature, pressure, flow rate, and a processor output for controlling the value of a manipulated variable (e.g., changing the position of a valve, increasing or decreasing the duty cycle and/or temperature for a heater). Optionally, at least one hydroprocessing condition for a given type of hydroprocessing may not have an associated controller.

In this discussion, unless otherwise specified a lubricant boiling range fraction corresponds to a fraction having an initial boiling point or alternatively a T5 boiling point of at least about 370°C (∼700°F). A distillate fuel boiling range fraction, such as a diesel product fraction, corresponds to a fraction having a boiling range from about 193°C (375°F) to about 370°C (∼700°F). Thus, distillate fuel boiling range fractions (such as distillate fuel product fractions) can have initial boiling points (or alternatively T5 boiling points) of at least about 193°C and final boiling points (or alternatively T95 boiling points) of about 370°C or less. A naphtha boiling range fraction corresponds to a fraction having a boiling range from about 36°C (122°F) to about 193°C (375°F) to about 370°C (∼700°F). Thus, naphtha fuel product fractions can have initial boiling points (or alternatively T5 boiling points) of at least about 36°C and final boiling points (or alternatively T95 boiling points) of about 193°C or less. It is noted that 36°C roughly corresponds to a boiling point for the various isomers of a C5 alkane. A fuels boiling range fraction can correspond to a distillate fuel boiling range fraction, a naphtha boiling range fraction, or a fraction that includes both distillate fuel boiling range and naphtha boiling range components. Light ends are defined as products with boiling points below about 36°C, which include various C1 - C4 compounds. When determining a boiling point or a boiling range for a feed or product fraction, an appropriate ASTM test method can be used, such as the procedures described in ASTM D2887, D2892, and/or D86. Preferably, ASTM D2887 should be used unless a sample is not appropriate for characterization based on ASTM D2887. For example, for samples that will not completely elute from a chromatographic column, ASTM D7169 can be used.

### Process Variations

In various aspects, hydroprocessing of deasphalted oil to form lubricant base stocks can result in formation of a variety of products. In addition to light neutral, heavy neutral, and bright stock products formed by block processing, additional fuels and lubricant products can be formed. The fuels products can include naphtha and diesel fractions formed due to conversion in the sour stage and conversion in the sweet stage. The sour stage fuels products can optionally be processed further, if necessary, in order to satisfy desired standards for sulfur and nitrogen content. The additional lubricant products can include additional light neutral and heavy neutral products that are formed during block processing. For example, sweet stage processing of the heavy neutral block feed can result in some "conversion" of heavy neutral base stock to light neutral base stock. Similarly, sweet stage processing of the bright stock block feed can result in some "conversion" of bright stock to light neutral base stock and/or heavy neutral base stock.

In some aspects, alternative types of products and/or product dispositions can be generated in conjunction with hydroprocessing of a deasphalted oil. For example, various sour stage and/or sweet stage effluents can be suitable for use as a steam cracker feed. Both the sour stage hydrocrackate and the basestock products, particularly the heavy diesel and naphtha, and/or any narrow boiling range fractions that may be distilled in between lube cuts to manage lube properties, can make suitable steam cracker feeds. It could be a single component, a blend of a few components, or the entire sour stage product which may be sent to a steam cracker. Such a steam cracker feed can have 98 wt% or more saturates for the sweet products and 75 wt% or more saturates for the hydrocrackates, which can be beneficial in a steam cracker feed. Additionally, such a feed can be low in sulfur which can reduce or minimize tar formation.

As another example, the bright stock product can be used as an unexpectedly beneficial fluxant for asphalt production. The bright stock is sufficiently heavy to avoid mass loss, has low viscosity, and although the saturates content is relatively high, because it is dewaxed it has very low wax. Wax is a detrimental quality for asphalt, and most low viscosity fluxes for asphalt type streams that are also non-toxic, like vacuum gas oils, have significant quantities of wax. This can make a bright stock made according to the processes described herein a suitable flux for a high asphaltene, high viscosity asphalt blend component, such as deasphalter rock, or deasphalter rock from a high-lift deasphalter.

In various aspects, the sweet stage of the reaction system can include a hydrocracking catalyst followed (downstream) by a dewaxing catalyst followed by an aromatic saturation catalyst. For example, the sweet stage of a reaction system can include a first reactor containing hydrocracking catalyst, a second reactor containing dewaxing catalyst, and a third reactor containing aromatic saturation catalyst. In some aspects, other types of catalyst configurations in the sweet stage can be beneficial.

As an example, the first reactor in the sweet stage can include a hydrocracking catalyst followed by an aromatic saturation catalyst. Including both hydrocracking and aromatic saturation functionality in the initial part of the sweet stage can be beneficial for allowing boiling point conversion and/or viscosity index upgrading that can be tailored for each type of blocked feed. Because this reactor is a sweet processing stage, the temperature can be relatively low, thus allowing effective aromatic saturation (reduced amount of constraint due to equilibrium) while still being able to achieve desired boiling point conversion and/or viscosity index upgrading.

As another example, the initial reactor or portion of the sweet stage can include an aromatic saturation catalyst without the presence of a hydrocracking catalyst. This type of configuration can provide superior yield for basestocks that do not require additional viscosity index upgrade in the sweet stage. Additionally or alternately, at end of run, the lack of a hydrocracking catalyst can allow the sweet stage reactors (or at least the initial reactor) to be operated to be operated at higher temperature to achieve desired aromatic saturation without excessive cracking.

In various aspects, the sour stage of the reaction system can include one or more optional demetallization catalysts followed (downstream) by a hydrotreating catalyst followed by a hydrocracking catalyst. In some aspects, a large pore catalyst, such as a demetallization catalyst, can be included downstream from the hydrocracking catalyst. Such a large pore catalyst downstream from the hydrocracking catalyst can be beneficial due to the differences between a feed corresponding to a high yield deasphalted oil and a conventional feed for lubricant production. During processing of a conventional feed for lubricant production, removal of mercaptans can potentially pose a challenge at the end of a sour stage. A conventional hydrotreating catalyst after a hydrocracking catalyst can be suitable for removal of such mercaptans. For a feed based on a deasphalted oil, the substantially higher percentage of multi-ring structures in the feed can result in formation of polynuclear aromatics during hydrocracking. Such polynuclear aromatics are not as readily treated using a conventional hydrotreating catalyst. However, the larger pore size of a demetallization catalyst (such as 200 nm or greater median pore size) can be allow demetallization catalysts to be effective for saturation of polynuclear aromatics. Such demetallization catalsyts can also be effective for mercaptan removal.

### Feedstocks

In various aspects, at least a portion of a feedstock for processing as described herein can correspond to a vacuum resid fraction or another type 950°F+ (510°C+) or 1000°F+ (538°C+) fraction. Another example of a method for forming a 950°F+ (510°C+) or 1000°F+ (538°C+) fraction is to perform a high temperature flash separation. The 950°F+ (510°C+) or 1000°F+ (538°C+) fraction formed from the high temperature flash can be processed in a manner similar to a vacuum resid.

A vacuum resid fraction or a 950°F+ (510°C+) fraction formed by another process (such as a flash fractionation bottoms or a bitumen fraction) can be deasphalted at low severity to form a deasphalted oil. Optionally, the feedstock can also include a portion of a conventional feed for lubricant base stock production, such as a vacuum gas oil.

A vacuum resid (or other 510°C+) fraction can correspond to a fraction with a T5 distillation point (ASTM D2892, or ASTM D7169 if the fraction will not completely elute from a chromatographic system) of at least about 900°F (482°C), or at least 950°F (510°C), or at least 1000°F (538°C). Alternatively, a vacuum resid fraction can be characterized based on a T10 distillation point (ASTM D2892 / D7169) of at least about 900°F (482°C), or at least 950°F (510°C), or at least 1000°F (538°C).

Resid (or other 510°C+) fractions can be high in metals. For example, a resid fraction can be high in total nickel, vanadium and iron contents. In an aspect, a resid fraction can contain at least 0.00005 grams of Ni/V/Fe (50 wppm) or at least 0.0002 grams of Ni/V/Fe (200 wppm) per gram of resid, on a total elemental basis of nickel, vanadium and iron. In other aspects, the heavy oil can contain at least 500 wppm of nickel, vanadium, and iron, such as up to 1000 wppm or more.

Contaminants such as nitrogen and sulfur are typically found in resid (or other 510°C+) fractions, often in organically-bound form. Nitrogen content can range from about 50 wppm to about 10,000 wppm elemental nitrogen or more, based on total weight of the resid fraction. Sulfur content can range from 500 wppm to 100,000 wppm elemental sulfur or more, based on total weight of the resid fraction, or from 1000 wppm to 50,000 wppm, or from 1000 wppm to 30,000 wppm.

Still another method for characterizing a resid (or other 510°C+) fraction is based on the Conradson carbon residue (CCR) of the feedstock. The Conradson carbon residue of a resid fraction can be at least about 5 wt%, such as at least about 10 wt% or at least about 20 wt%. Additionally or alternately, the Conradson carbon residue of a resid fraction can be about 50 wt% or less, such as about 40 wt% or less or about 30 wt% or less.

In some aspects, a vacuum gas oil fraction can be co-processed with a deasphalted oil. The vacuum gas oil can be combined with the deasphalted oil in various amounts ranging from 20 parts (by weight) deasphalted oil to 1 part vacuum gas oil (i.e., 20 : 1) to 1 part deasphalted oil to 1 part vacuum gas oil. In some aspects, the ratio of deasphalted oil to vacuum gas oil can be at least 1 : 1 by weight, or at least 1.5 : 1, or at least 2 : 1. Typical (vacuum) gas oil fractions can include, for example, fractions with a T5 distillation point to T95 distillation point of 650°F (343°C) - 1050°F (566°C), or 650°F (343°C) - 1000°F (538°C), or 650°F (343°C) - 950°F (510°C), or 650°F (343°C) - 900°F (482°C), or ∼700°F (370°C) - 1050°F (566°C), or ∼700°F (370°C) - 1000°F (538°C), or ∼700°F (370°C) - 950°F (510°C), or ∼700°F (370°C) - 900°F (482°C), or 750°F (399°C) - 1050°F (566°C), or 750°F (399°C) - 1000°F (538°C), or 750°F (399°C) - 950°F (510°C), or 750°F (399°C) - 900°F (482°C). For example a suitable vacuum gas oil fraction can have a T5 distillation point of at least 343°C and a T95 distillation point of 566°C or less; or a T10 distillation point of at least 343°C and a T90 distillation point of 566°C or less; or a T5 distillation point of at least 370°C and a T95 distillation point of 566°C or less; or a T5 distillation point of at least 343°C and a T95 distillation point of 538°C or less.

### Solvent Deasphalting

Solvent deasphalting is a solvent extraction process. In some aspects, suitable solvents for methods as described herein include alkanes or other hydrocarbons (such as alkenes) containing 4 to 7 carbons per molecule. Examples of suitable solvents include n-butane, isobutane, n-pentane, C₄₊ alkanes, C₅₊ alkanes, C₄₊ hydrocarbons, and C₅₊ hydrocarbons. In other aspects, suitable solvents can include C₃ hydrocarbons, such as propane. In such other aspects, examples of suitable solvents include propane, n-butane, isobutane, n-pentane, C₃₊ alkanes, C₄₊ alkanes, C₅₊ alkanes, C₃₊ hydrocarbons, C₄₊ hydrocarbons, and C₅₊ hydrocarbons

In this discussion, a solvent comprising Cₙ (hydrocarbons) is defined as a solvent composed of at least 80 wt% of alkanes (hydrocarbons) having n carbon atoms, or at least 85 wt%, or at least 90 wt%, or at least 95 wt%, or at least 98 wt%. Similarly, a solvent comprising Cₙ₊ (hydrocarbons) is defined as a solvent composed of at least 80 wt% of alkanes (hydrocarbons) having n or more carbon atoms, or at least 85 wt%, or at least 90 wt%, or at least 95 wt%, or at least 98 wt%.

In this discussion, a solvent comprising Cₙ alkanes (hydrocarbons) is defined to include the situation where the solvent corresponds to a single alkane (hydrocarbon) containing n carbon atoms (for example, n = 3, 4, 5, 6, 7) as well as the situations where the solvent is composed of a mixture of alkanes (hydrocarbons) containing n carbon atoms. Similarly, a solvent comprising Cₙ₊ alkanes (hydrocarbons) is defined to include the situation where the solvent corresponds to a single alkane (hydrocarbon) containing n or more carbon atoms (for example, n = 3, 4, 5, 6, 7) as well as the situations where the solvent corresponds to a mixture of alkanes (hydrocarbons) containing n or more carbon atoms. Thus, a solvent comprising C₄₊ alkanes can correspond to a solvent including n-butane; a solvent include n-butane and isobutane; a solvent corresponding to a mixture of one or more butane isomers and one or more pentane isomers; or any other convenient combination of alkanes containing 4 or more carbon atoms. Similarly, a solvent comprising C₅₊ alkanes (hydrocarbons) is defined to include a solvent corresponding to a single alkane (hydrocarbon) or a solvent corresponding to a mixture of alkanes (hydrocarbons) that contain 5 or more carbon atoms. Alternatively, other types of solvents may also be suitable, such as supercritical fluids. In various aspects, the solvent for solvent deasphalting can consist essentially of hydrocarbons, so that at least 98 wt% or at least 99 wt% of the solvent corresponds to compounds containing only carbon and hydrogen. In aspects where the deasphalting solvent corresponds to a C₄₊ deasphalting solvent, the C₄₊ deasphalting solvent can include less than 15 wt% propane and/or other C₃ hydrocarbons, or less than 10 wt%, or less than 5 wt%, or the C₄₊ deasphalting solvent can be substantially free of propane and/or other C₃ hydrocarbons (less than 1 wt%). In aspects where the deasphalting solvent corresponds to a C₅₊ deasphalting solvent, the C₅₊ deasphalting solvent can include less than 15 wt% propane, butane and/or other C₃ - C₄ hydrocarbons, or less than 10 wt%, or less than 5 wt%, or the C₅₊ deasphalting solvent can be substantially free of propane, butane, and/or other C₃ - C₄ hydrocarbons (less than 1 wt%). In aspects where the deasphalting solvent corresponds to a C₃₊ deasphalting solvent, the C₃₊ deasphalting solvent can include less than 10 wt% ethane and/or other C₂ hydrocarbons, or less than 5 wt%, or the C₃₊ deasphalting solvent can be substantially free of ethane and/or other C₂ hydrocarbons (less than 1 wt%).

Deasphalting of heavy hydrocarbons, such as vacuum resids, is known in the art and practiced commercially. A deasphalting process typically corresponds to contacting a heavy hydrocarbon with an alkane solvent (propane, butane, pentane, hexane, heptane etc and their isomers), either in pure form or as mixtures, to produce two types of product streams. One type of product stream can be a deasphalted oil extracted by the alkane, which is further separated to produce deasphalted oil stream. A second type of product stream can be a residual portion of the feed not soluble in the solvent, often referred to as rock or asphaltene fraction. The deasphalted oil fraction can be further processed into make fuels or lubricants. The rock fraction can be further used as blend component to produce asphalt, fuel oil, and/or other products. The rock fraction can also be used as feed to gasification processes such as partial oxidation, fluid bed combustion or coking processes. The rock can be delivered to these processes as a liquid (with or without additional components) or solid (either as pellets or lumps).

During solvent deasphalting, a resid boiling range feed (optionally also including a portion of a vacuum gas oil feed) can be mixed with a solvent. Portions of the feed that are soluble in the solvent are then extracted, leaving behind a residue with little or no solubility in the solvent. The portion of the deasphalted feedstock that is extracted with the solvent is often referred to as deasphalted oil. Typical solvent deasphalting conditions include mixing a feedstock fraction with a solvent in a weight ratio of from about 1 : 2 to about 1 : 10, such as about 1 : 8 or less. Typical solvent deasphalting temperatures range from 40°C to 200°C, or 40°C to 150°C, depending on the nature of the feed and the solvent. The pressure during solvent deasphalting can be from about 50 psig (345 kPag) to about 500 psig (3447 kPag).

It is noted that the above solvent deasphalting conditions represent a general range, and the conditions will vary depending on the feed. For example, under typical deasphalting conditions, increasing the temperature can tend to reduce the yield while increasing the quality of the resulting deasphalted oil. Under typical deasphalting conditions, increasing the molecular weight of the solvent can tend to increase the yield while reducing the quality of the resulting deasphalted oil, as additional compounds within a resid fraction may be soluble in a solvent composed of higher molecular weight hydrocarbons. Under typical deasphalting conditions, increasing the amount of solvent can tend to increase the yield of the resulting deasphalted oil. As understood by those of skill in the art, the conditions for a particular feed can be selected based on the resulting yield of deasphalted oil from solvent deasphalting. In aspects where a C₃ deasphalting solvent is used, the yield from solvent deasphalting can be 40 wt% or less. In some aspects, C₄ deasphalting can be performed with a yield of deasphalted oil of 50 wt% or less, or 40 wt% or less. In various aspects, the yield of deasphalted oil from solvent deasphalting with a C₄₊ solvent can be at least 50 wt% relative to the weight of the feed to deasphalting, or at least 55 wt%, or at least 60 wt% or at least 65 wt%, or at least 70 wt%. In aspects where the feed to deasphalting includes a vacuum gas oil portion, the yield from solvent deasphalting can be characterized based on a yield by weight of a 950°F+ (510°C) portion of the deasphalted oil relative to the weight of a 510°C+ portion of the feed. In such aspects where a C₄₊ solvent is used, the yield of 510°C+ deasphalted oil from solvent deasphalting can be at least 40 wt% relative to the weight of the 510°C+ portion of the feed to deasphalting, or at least 50 wt%, or at least 55 wt%, or at least 60 wt% or at least 65 wt%, or at least 70 wt%. In such aspects where a C₄₋ solvent is used, the yield of 510°C+ deasphalted oil from solvent deasphalting can be 50 wt% or less relative to the weight of the 510°C+ portion of the feed to deasphalting, or 40 wt% or less, or 35 wt% or less.

### Multimetallic Catalyst and Forming Multimetallic Catalyst from a Precursor Including Organic Components

As used herein, the term "bulk", when describing a mixed metal oxide catalyst composition, indicates that the catalyst composition is self-supporting in that it does not require a carrier or support. It is well understood that bulk catalysts may have some minor amount of carrier or support material in their compositions (e.g., about 20 wt % or less, about 15 wt % or less, about 10 wt % or less, about 5 wt % or less, or substantially no carrier or support, based on the total weight of the catalyst composition); for instance, bulk hydroprocessing catalysts may contain a minor amount of a binder, e.g., to improve the physical and/or thermal properties of the catalyst. In contrast, heterogeneous or supported catalyst systems typically comprise a carrier or support onto which one or more catalytically active materials are deposited, often using an impregnation or coating technique. Nevertheless, heterogeneous catalyst systems without a carrier or support (or with a minor amount of carrier or support) are generally referred to as bulk catalysts and are frequently formed by co-precipitation or solid-solid reactions in slurries.

In various aspects, the methods described herein can include use of a catalyst formed from a catalyst precursor composition comprising at least one metal from Group 6 of the Periodic Table of the Elements, at least one metal from Groups 8-10 of the Periodic Table of the Elements. The catalyst precursor compositions can either further include a reaction product, or the catalyst precursor can be treated with compounds used to form such a reaction product in situ.

The reaction product can be formed in various manners. In some aspects, the reaction product can be formed from (i) a first organic compound containing at least one amine group and at least 10 carbons or (ii) a second organic compound containing at least one carboxylic acid group and at least 10 carbons, but not both (i) and (ii), wherein the reaction product contains additional unsaturated carbon atoms, relative to (i) the first organic compound or (ii) the second organic compound, wherein the metals of the catalyst precursor composition are arranged in a crystal lattice, and wherein the reaction product is not located within the crystal lattice. Additionally or alternately, in some aspects the reaction product can be formed from (i) a first organic compound containing at least one amine group, and (ii) a second organic compound separate from said first organic compound and containing at least one carboxylic acid group. More broadly, this type of aspect relates to use of a catalyst formed from a catalyst precursor composition comprising at least one metal from Group 6 of the Periodic Table of the Elements, at least one metal from Groups 8-10 of the Periodic Table of the Elements, and a condensation reaction product formed from (i) a first organic compound containing at least one first functional group, and (ii) a second organic compound separate from said first organic compound and containing at least one second functional group, wherein said first functional group and said second functional group are capable of undergoing a condensation reaction and/or a (decomposition) reaction causing an additional unsaturation to form an associated product. Though the description above and herein often refers specifically to the condensation reaction product being an amide, it should be understood that any in situ condensation reaction product formed can be substituted for the amide described herein. For example, if the first functional group is a hydroxyl group and the second functional group is a carboxylic acid or an acid chloride or an organic ester capable of undergoing transesterification with the hydroxyl group, then the in situ condensation reaction product formed would be an ester. When this reaction product is an amide, the presence of the reaction product in any intermediate or final composition can be determined by methods well known in the art, e.g., by infrared spectroscopy (FTIR) techniques. When this reaction product contains additional unsaturation(s) not present in the first and second organic compounds, e.g., from at least partial decomposition/dehydrogenation at conditions including elevated temperatures, the presence of the additional unsaturation(s) in any intermediate or final composition can be determined by methods well known in the art, e.g., by FTIR and/or nuclear magnetic resonance (¹³C NMR) techniques. This catalyst precursor composition can be a bulk metal catalyst precursor composition or a heterogeneous (supported) metal catalyst precursor composition.

This catalyst precursor composition can be a bulk metal catalyst precursor composition or a supported metal catalyst precursor composition. When it is a bulk mixed metal catalyst precursor composition, the reaction product can be obtained by heating the composition (though specifically the amine-containing compound or the carboxylic acid-containing compound) to a temperature from about 195°C to about 260°C for a time sufficient for the first or second organic compounds to react to form additional in situ unsaturated carbon atoms and/or become more oxidized than the first or second organic compounds, but not for so long that more than 50% by weight of the first or second organic compound is volatilized, thereby forming a catalyst precursor composition that contains in situ formed unsaturated carbon atoms and/or that is further oxidized.

A bulk mixed metal hydroprocessing catalyst composition can be produced from this bulk mixed metal catalyst precursor composition by sulfiding it under sufficient sulfiding conditions, which sulfiding should begin in the presence of the in situ additionally unsaturated reaction product (which may result from at least partial decomposition, e.g., via oxidative dehydrogenation in the presence of oxygen and/or via non-oxidative dehydrogenation in the absence of an appropriate concentration of oxygen, of typically-unfunctionalized organic portions of the first or second organic compounds, e.g., of an aliphatic portion of an organic compound and/or through conjugation/aromatization of unsaturations expanding upon an unsaturated portion of an organic compound).

When the catalyst precursor is a bulk mixed metal catalyst precursor composition that includes an ex situ or in situ formed amide, the thermal treatment of the amide-impregnated metal oxide component is carried out by heating the impregnated composition to a temperature and for a time which does not result in gross decomposition of the amide, although additional unsaturation may arise from partial *in situ* decomposition; the temperature is typically from about 195°C to about 250°C (or optionally about 195°C to about 260°C), but higher temperatures, e.g. in the range of 250 to 280°C, can be used in order to abbreviate the duration of the heating although due care is required to avoid the gross decomposition of the pre-formed amide, as discussed further below. The bulk mixed metal hydroprocessing catalyst can be produced from this precursor by sulfiding it with the sulfiding taking place with the amide present on the metal oxide component (*i.e.*, when the thermally treated amide, is substantially present and/or preferably not significantly decomposed by the beginning of the sulfiding step). Additional unsaturation may be present in the organic component of the catalyst precursor resulting from a variety of mechanisms including partial decomposition, (*e.g.*, via oxidative dehydrogenation in the presence of oxygen and/or via non-oxidative dehydrogenation in the absence of an appropriate concentration of oxygen), of typically-unfunctionalized organic portions of the amide and/or through conjugation/aromatization of unsaturations expanding upon an unsaturated portion the amide. The treated organic component may also contain additional oxygen in addition to the unsaturation when the treatment is carried out in an oxidizing atmosphere.

Catalyst precursor compositions and hydroprocessing catalyst compositions of the present invention comprise at least one metal from Group 6 of the Periodic Table of Elements and at least one metal from Groups 8-10 of the Periodic Table of Elements, and optionally at least one metal from Group 5 of the Periodic Table of Elements. Generally, these metals are present in their substantially fully oxidized form, which can typically take the form of simple metal oxides, but which may be present in a variety of other oxide forms, e.g., such as hydroxides, oxyhydroxides, oxycarbonates, carbonates, oxynitrates, oxysulfates, or the like, or some combination thereof. In one preferred embodiment, the Group 6 metal(s) can be Mo and/or W, and the Group 8-10 metal(s) can be Co and/or Ni. Generally, the atomic ratio of the Group 6 metal(s) to the metal(s) of Groups 8-10 can be from about 2:1 to about 1:3, for example from about 5:4 to about 1:2, or from about 20:19 to about 3:4. When the composition further comprises at least one metal from Group 5, that at least one metal can be V and/or Nb. When present, the amount of Group 5 metal(s) can be such that the atomic ratio of the Group 6 metal(s) to the Group 5 metal(s) can be from about 99:1 to about 1:1, for example from about 99:1 to about 5:1, from about 99:1 to about 10:1, or from about 99:1 to about 20:1. Additionally or alternately, when Group 5 metal(s) is(are) present, the atomic ratio of the sum of the Group 5 metal(s) plus the Group (6) metal(s) compared to the metal(s) of Groups 8-10 can be from about 2:1 to about 1:3, for example from about 5:4 to about 1:2, or from about 20:19 to about 3:4.

The metals in the catalyst precursor compositions and in the hydroprocessing catalyst compositions according to the invention can be present in any suitable form prior to sulfiding, but can often be provided as metal oxides. When provided as bulk mixed metal oxides, such bulk oxide components of the catalyst precursor compositions and of the hydroprocessing catalyst compositions according to the invention can be prepared by any suitable method known in the art, but can generally be produced by forming a slurry, typically an aqueous slurry, comprising (1) (a) an oxyanion of the Group 6 metal(s), such as a tungstate and/or a molybdate, or (b) an insoluble (oxide, acid) form of the Group 6 metal(s), such as tungstic acid and/or molybdenum trioxide, (2) a salt of the Group 8-10 metal(s), such as nickel carbonate, and optionally, when present, (3) (a) a salt or oxyanion of a Group 5 metal, such as a vanadate and/or a niobate, or (b) insoluble (oxide, acid) form of a Group 5 metal, such as niobic acid and/or diniobium pentoxide. The slurry can be heated to a suitable temperature, such as from about 60°C to about 150°C, at a suitable pressure, e.g., at atmospheric or autogenous pressure, for an appropriate time, e.g., about 4 hours to about 24 hours.

Non-limiting examples of suitable mixed metal oxide compositions can include, but are not limited to, nickel-tungsten oxides, cobalt-tungsten oxides, nickel-molybdenum oxides, cobalt-molybdenum oxides, nickel-molybdenum-tungsten oxides, cobalt-molybdenum-tungsten oxides, cobalt-nickel-tungsten oxides, cobalt-nickel-molybdenum oxides, cobalt-nickel-tungsten-molybdenum oxides, nickel-tungsten-niobium oxides, nickel-tungsten-vanadium oxides, cobalt-tungsten-vanadium oxides, cobalt-tungsten-niobium oxides, nickel-molybdenum-niobium oxides, nickel-molybdenum-vanadium oxides, nickel-molybdenum-tungsten-niobium oxides, nickel-molybdenum-tungsten-vanadium oxides, and the like, and combinations thereof.

Suitable mixed metal oxide compositions can advantageously exhibit a specific surface area (as measured via the nitrogen BET method using a Quantachrome Autosorb™ apparatus) of about 20 m²/g to about 500 m²/g, or about 30 m²/g to about 300 m²/g, or about 50 m²/g to about 150 m²/g.

In some aspects, after separating and drying the mixed metal oxide (slurry) composition, it can be treated, generally by impregnation with the reaction product and/or the reagents that are suitable for forming the reaction product.

In some aspects, the first and/or second organic compound can comprise at least 10 carbon atoms, for example can comprise from 10 to 20 carbon atoms or can comprise a primary monoamine having from 10 to 30 carbon atoms. Additionally or alternately, the second organic compound can comprise at least 10 carbon atoms, for example can comprise from 10 to 20 carbon atoms or can comprise only one carboxylic acid group and can have from 10 to 30 carbon atoms. Further additionally or alternately, the total number of carbon atoms comprised among both the first and second organic compounds can be at least 15 carbon atoms, for example at least 20 carbon atoms, at least 25 carbon atoms, at least 30 carbon atoms, or at least 35 carbon atoms, such as optionally up to 70 carbon atoms, or optionally up to 100 carbon atoms.

Representative examples of organic compounds containing amine groups can include, but are not limited to, primary and/or secondary, linear, branched, and/or cyclic amines, such as triacontanylamine, octacosanylamine, hexacosanylamine, tetracosanylamine, docosanylamine, erucylamine, eicosanylamine, octadecylamine, oleylamine, linoleylamine, hexadecylamine, sapienylamine, palmitoleylamine, tetradecylamine, myristoleylamine, dodecylamine, decylamine, nonylamine, cyclooctylamine, octylamine, cycloheptylamine, heptylamine, cyclohexylamine, n-hexylamine, isopentylamine, n-pentylamine, t-butylamine, n-butylamine, isopropylamine, n-propylamine, adamantanamine, adamantanemethylamine, pyrrolidine, piperidine, piperazine, imidazole, pyrazole, pyrrole, pyrrolidine, pyrroline, indazole, indole, carbazole, norbornylamine, aniline, pyridylamine, benzylamine, aminotoluene, alanine, arginine, aspartic acid, glutamic acid, glutamine, glycine, histidine, isoleucine, leucine, lysine, phenylalanine, serine, threonine, valine, 1-amino-2-propanol, 2-amino-1-propanol, diaminoeicosane, diaminooctadecane, diaminohexadecane, diaminotetradecane, diaminododecane, diaminodecane, 1,2-diaminocyclohexane, 1,3-diaminocyclohexane, 1,4-diaminocyclohexane, ethylenediamine, ethanolamine, p-phenylenediamine, o-phenylenediamine, m-phenylenediamine, 1,2-propylenediamine, 1,3-propylenediamine, 1,4-diaminobutane, 1,3diamino-2-propanol, and the like, and combinations thereof. In an embodiment, the molar ratio of the Group 6 metal(s) in the composition to the first organic compound during treatment can be from about 1:1 to about 20:1.

Additionally or alternately, in some aspects the amine portion of the first organic compound can be a part of a larger functional group in that compound, so long as the amine portion (notably the amine nitrogen and the constituents attached thereto) retains its operability as a Lewis base. For instance, the first organic compound can comprise a urea, which functional group comprises an amine portion attached to the carbonyl portion of an amide group. In such an instance, the urea can be considered functionally as an "amine-containing" functional group for the purposes of the present invention herein, except in situations where such inclusion is specifically contradicted. Aside from ureas, other examples of such amine-containing functional groups that may be suitable for satisfying the at least one amine group in the first organic compound can generally include, but are not limited to, hydrazides, sulfonamides, and the like, and combinations thereof.

The amine functional group from the first organic compound can include primary or secondary amines, as mentioned above, but generally does not include tertiary or quaternary amines, as tertiary and quaternary amines tend not to be able to form amides. Furthermore, the first organic compound can contain other functional groups besides amines, whether or not they are capable of participating in forming an amide or other condensation reaction product with one or more of the functional groups from second organic compound. For instance, the first organic compound can comprise an amino acid, which possesses an amine functional group and a carboxylic acid functional group simultaneously. In such an instance, the amino acid would qualify as only one of the organic compounds, and not both; thus, in such an instance, either an additional amine-containing (first) organic compound would need to be present (in the circumstance where the amino acid would be considered the second organic compound) or an additional carboxylic acid-containing (second) organic compound would need to be present (in the circumstance where the amino acid would be considered the first organic compound). Aside from carboxylic acids, other examples of such secondary functional groups in amine-containing organic compounds can generally include, but are not limited to, hydroxyls, aldehydes, anhydrides, ethers, esters, imines, imides, ketones, thiols (mercaptans), thioesters, and the like, and combinations thereof.

Representative examples of organic compounds containing carboxylic acids can include, but are not limited to, primary and/or secondary, linear, branched, and/or cyclic amines, such as triacontanoic acid, octacosanoic acid, hexacosanoic acid, tetracosanoic acid, docosanoic acid, erucic acid, docosahexanoic acid, eicosanoic acid, eicosapentanoic acid, arachidonic acid, octadecanoic acid, oleic acid, elaidic acid, stearidonic acid, linoleic acid, alpha-linolenic acid, hexadecanoic acid, sapienic acid, palmitoleic acid, tetradecanoic acid, myristoleic acid, dodecanoic acid, decanoic acid, nonanoic acid, cyclooctanoic acid, octanoic acid, cycloheptanoic acid, heptanoic acid, cyclohexanoic acid, hexanoic acid, adamantanecarboxylic acid, norbornaneacetic acid, benzoic acid, salicylic acid, acetylsalicylic acid, citric acid, maleic acid, malonic acid, glutaric acid, lactic acid, oxalic acid, tartaric acid, cinnamic acid, vanillic acid, succinic acid, adipic acid, phthalic acid, isophthalic acid, terephthalic acid, ethylenediaminetetracarboxylic acids (such as EDTA), fumaric acid, alanine, arginine, aspartic acid, glutamic acid, glutamine, glycine, histidine, isoleucine, leucine, lysine, phenylalanine, serine, threonine, valine, 1,2-cyclohexanedicarboxylic acid, 1,3-cyclohexanedicarboxylic acid, 1,4-cyclohexanedicarboxylic acid, and the like, and combinations thereof. In an embodiment, the molar ratio of the Group 6 metal(s) in the composition to the second organic compound during treatment can be from about 3:1 to about 20:1.

In some aspects, the second organic compound can optionally contain other functional groups besides carboxylic acids. For instance, the second organic compound can comprise an aminoacid, which possesses a carboxylic acid functional group and an amine functional group simultaneously. Aside from amines, other examples of such secondary functional groups in carboxylic acid-containing organic compounds can generally include, but are not limited to, hydroxyls, aldehydes, anhydrides, ethers, esters, imines, imides, ketones, thiols (mercaptans), thioesters, and the like, and combinations thereof. In some embodiments, the second organic compound can contain no additional amine or alcohol functional groups in addition to the carboxylic acid functional group(s).

Additionally or alternately, the reactive portion of the second organic compound can be a part of a larger functional group in that compound and/or can be a derivative of a carboxylic acid that behaves similarly enough to a carboxylic acid, such that the reactive portion and/or derivative retains its operability as a Lewis acid. One example of a carboxylic acid derivative can include an alkyl carboxylate ester, where the alkyl group does not substantially hinder (over a reasonable time scale) the Lewis acid functionality of the carboxylate portion of the functional group.

For aspects involving formation of a condensation product (including aspects involving ex situ formation of an amide), while there is not a strict limit on the ratio between the first organic compound and the second organic compound, because the goal of the addition of the first and second organic compounds is to attain a condensation reaction product, it may be desirable to have a ratio of the reactive functional groups within the first and second organic compounds, respectively, from about 1:4 to about 4:1, for example from about 1:3 to about 3:1 or from about 1:2 to about 2:1. In some optional aspects, tt has been observed that catalysts made with amides from equimolar quantities of the amine and carboxylic acid reactants compounds show performance improvements in hydroprocessing certain feeds and for this reason, amides made with an equimolar ratio are preferred.

In certain aspects, the organic compound(s)/additive(s) and/or the reaction product(s) are not located/incorporated within the crystal lattice of the mixed metal oxide precursor composition, e.g., instead being located on the surface and/or within the pore volume of the precursor composition and/or being associated with (bound to) one or more metals or oxides of metals in a manner that does not significantly affect the crystalline lattice of the mixed metal oxide precursor composition, as observed through XRD and/or other crystallographic spectra. It is noted that, in these certain embodiments, a sulfided version of the mixed metal oxide precursor composition can still have its sulfided form affected by the organic compound(s)/additive(s) and/or the reaction product(s), even though the oxide lattice is not significantly affected.

Practically, the treating step (a) above can comprise one (or more) of three methods: (1) first treating the catalyst precursor composition with the first organic compound and second with the second organic compound; (2) first treating the catalyst precursor composition with the second organic compound and second with the first organic compound; and/or (3) treating the catalyst precursor composition simultaneously with the first organic compound and with the second organic compound.

In certain advantageous embodiments, the heating step (b) above can be conducted for a sufficiently long time so as to form an amide, but not for so long that the amide so formed substantially decomposes. Additionally or alternately, the heating step (b) above can be conducted for a sufficiently long time so as to form additional unsaturation(s), which may result from at least partial decomposition (e.g., oxidative and/or non-oxidative dehydrogenation and/or aromatization) of some (typically-unfunctionalized organic) portions of the organic compounds, but generally not for so long that the at least partial decomposition (i) substantially decomposes any condensation product, such as amide, and/or (ii) volatilizes more than 50% by weight of the combined first and second organic compounds.

It is contemplated that the specific lower and upper temperature limits based on the above considerations can be highly dependent upon a variety of factors that can include, but are not limited to, the atmosphere under which the heating is conducted, the chemical and/or physical properties of the first organic compound, the second organic compound, the reaction product, and/or any reaction byproduct, or a combination thereof. In one embodiment, the heating temperature can be at least about 120°C, for example about 150°C or more, or about 210°C or more, or about 250°C or more. Additionally or alternately, the heating temperature can be not greater than about 400°C, for example not greater than about 350°C, not greater than about 300°C, not greater than about 250°C, or not greater than about 200°C.

In one embodiment, the heating can be conducted in a low- or non-oxidizing atmosphere (and conveniently in an inert atmosphere, such as nitrogen). In an alternate embodiment, the heating can be conducted in a moderately- or highly-oxidizing environment. In another alternate embodiment, the heating can include a multi-step process in which one or more heating steps can be conducted in the low- or non-oxidizing atmosphere, in which one or more heating steps can be conducted in the moderately- or highly-oxidizing environment, or both. Of course, the period of time for the heating in the environment can be tailored to the first or second organic compound, but can typically extend from about 5 minutes to about 168 hours, for example from about 10 minutes to about 96 hours, from about 20 minutes to about 48 hours, from about 30 minutes to about 24 hours, or from about 1 hour to about 4 hours.

Additionally or alternately, in aspects where an ex situ formed amide is used, the amide can be formed prior to impregnation into the metal oxide component of the catalyst precursor by reaction of the amine component and the carboxylic acid component. Reaction typically takes place readily at mildly elevated temperatures up to about 200°C with liberation of water as a byproduct of the reaction at temperatures above 100°C and usually above 150°C. The reactants can usually be heated together to form a melt in which the reaction takes place and the melt impregnated directly into the metal oxide component which is preferably pre-heated to the same temperature as the melt in order to assist penetration into the structure of the metal oxide component. The reaction can also be carried out in the presence of a solvent if desired and the resulting solution used for the impregnation step. In certain embodiments, the amide and its heat treated derivative may not be located/incorporated within the crystal lattice of the mixed metal oxide precursor, *e.g.*, may instead be located on the surface and/or within the pore volume of the precursor and/or be associated with (bound to) one or more metals or oxides of metals in a manner that does not significantly affect the crystalline lattice of the mixed metal oxide precursor composition, as observed through XRD and/or other crystallographic spectra. A sulfided version of the mixed metal oxide precursor composition can still have its sulfided form affected by the organic compound(s)/additive(s) and/or the reaction product(s), even though the oxide lattice is not significantly affected.

In an embodiment, the organically treated catalyst precursor composition and/or the catalyst precursor composition containing the reaction product can contain from about 4 wt % to about 20 wt %, for example from about 5 wt % to about 15 wt %, carbon resulting from the first and second organic compounds and/or from the condensation product, as applicable, based on the total weight of the relevant composition.

Additionally or alternately, as a result of the heating step, the reaction product from the organically treated catalyst precursor can exhibit a content of unsaturated carbon atoms (which includes aromatic carbon atoms), as measured according to peak area comparisons using ¹³C NMR techniques, of at least 29%, for example at least about 30%, at least about 31%, at least about 32%, or at least about 33%. Further additionally or alternately, the reaction product from the organically treated catalyst precursor can optionally exhibit a content of unsaturated carbon atoms (which includes aromatic carbon atoms), as measured according to peak area comparisons using ¹³C NMR techniques, of up to about 70%, for example up to about 65%, up to about 60%, up to about 55%, up to about 50%, up to about 45%, up to about 40%, or up to about 35%. Still further additionally or alternately, as a result of the heating step, the reaction product from the organically treated catalyst precursor can exhibit an increase in content of unsaturated carbon atoms (which includes aromatic carbon atoms), as measured according to peak area comparisons using ¹³C NMR techniques, of at least about 17%, for example at least about 18%, at least about 19%, at least about 20%, or at least about 21% (e.g., in an embodiment where the first organic compound is oleylamine and the second organic compound is oleic acid, such that the combined unsaturation level of the unreacted compounds is about 11.1% of carbon atoms, a about. 17% increase in unsaturated carbons upon heating corresponds to about 28.1% content of unsaturated carbon atoms in the reaction product). Yet further additionally or alternately, the reaction product from the organically treated catalyst precursor can optionally exhibit an increase in content of unsaturated carbon atoms (which includes aromatic carbon atoms), as measured according to peak area comparisons using ¹³C NMR techniques, of up to about 60%, for example up to about 55%, up to about 50%, up to about 45%, up to about 40%, up to about 35%, up to about 30%, or up to about 25%.

Again further additionally or alternately, as a result of the heating step, the reaction product from the organically treated catalyst precursor can exhibit a ratio of unsaturated carbon atoms to aromatic carbon atoms, as measured according to peak area ratios using infrared spectroscopic techniques of a deconvoluted peak centered from about 1700 cm⁻¹ to about 1730 cm⁻¹ (e.g., at about 1715 cm⁻¹), compared to a deconvoluted peak centered from about 1380 cm⁻¹ to about 1450 cm⁻¹ (e.g., from about 1395 cm⁻¹ to about 1415 cm⁻¹), of at least 0.9, for example at least 1.0, at least 1.1, at least 1.2, at least 1.3, at least 1.4, at least 1.5, at least 1.7, at least 2.0, at least 2.2, at least 2.5, at least 2.7, or at least 3.0. Again still further additionally or alternately, the reaction product from the organically treated catalyst precursor can exhibit a ratio of unsaturated carbon atoms to aromatic carbon atoms, as measured according to peak area ratios using infrared spectroscopic techniques of a deconvoluted peak centered from about 1700 cm⁻¹ to about 1730 cm⁻¹ (e.g., at about 1715 cm⁻¹), compared to a deconvoluted peak centered from about 1380 cm⁻¹ to about 1450 cm⁻¹ (e.g., from about 1395 cm⁻¹ to about 1415 cm⁻¹), of up to 15, for example up to 10, up to 8.0, up to 7.0, up to 6.0, up to 5.0, up to 4.5, up to 4.0, up to 3.5, or up to 3.0.

A (sulfided) hydroprocessing catalyst composition can then be produced by sulfiding the catalyst precursor composition containing the reaction product. Sulfiding is generally carried out by contacting the catalyst precursor composition containing the reaction product with a sulfur-containing compound (e.g., elemental sulfur, hydrogen sulfide, polysulfides, or the like, or a combination thereof, which may originate from a fossil/mineral oil stream, from a biocomponent-based oil stream, from a combination thereof, or from a sulfur-containing stream separate from the aforementioned oil stream(s)) at a temperature and for a time sufficient to substantially sulfide the composition and/or sufficient to render the sulfided composition active as a hydroprocessing catalyst. For instance, the sulfidation can be carried out at a temperature from about 300°C to about 400°C, e.g., from about 310°C to about 350°C, for a period of time from about 30 minutes to about 96 hours, e.g., from about 1 hour to about 48 hours or from about 4 hours to about 24 hours. The sulfiding can generally be conducted before or after combining the metal (oxide) containing composition with a binder, if desired, and before or after forming the composition into a shaped catalyst. The sulfiding can additionally or alternately be conducted in situ in a hydroprocessing reactor. Obviously, to the extent that a reaction product of the first or second organic compounds contains additional unsaturations formed in situ, it would generally be desirable for the sulfidation (and/or any catalyst treatment after the organic treatment) to significantly maintain the in situ formed additional unsaturations of said reaction product.

The sulfided catalyst composition can exhibit a layered structure comprising a plurality of stacked YS₂ layers, where Y is the Group 6 metal(s), such that the average number of stacks (typically for bulk organically treated catalysts) can be from about 1.5 to about 3.5, for example from about 1.5 to about 3.0, from about 2.0 to about 3.3, from about 2.0 to about 3.0, or from about 2.1 to about 2.8. For instance, the treatment of the metal (oxide) containing precursor composition according to the invention can afford a decrease in the average number of stacks of the treated precursor of at least about 0.8, for example at least about 1.0, at least about 1.2, at least about 1.3, at least about 1.4, or at least about 1.5, as compared to an untreated metal (oxide) containing precursor composition. As such, the number of stacks can be considerably less than that obtained with an equivalent sulfided mixed metal (oxide) containing precursor composition produced without the first or second organic compound treatment. The reduction in the average number of stacks can be evidenced, e.g., via X-ray diffraction spectra of relevant sulfided compositions, in which the (002) peak appears significantly broader (as determined by the same width at the half-height of the peak) than the corresponding peak in the spectrum of the sulfided mixed metal (oxide) containing precursor composition produced without the organic treatment (and/or, in certain cases, with only a single organic compound treatment using an organic compound having less than 10 carbon atoms) according to the present invention. Additionally or alternately to X-ray diffraction, transmission electron microscopy (TEM) can be used to obtain micrographs of relevant sulfided compositions, including multiple microcrystals, within which micrograph images the multiple microcrystals can be visually analyzed for the number of stacks in each, which can then be averaged over the micrograph visual field to obtain an average number of stacks that can evidence a reduction in average number of stacks compared to a sulfided mixed metal (oxide) containing precursor composition produced without the organic treatment (and/or, in certain cases, with only a single organic compound treatment) according to the present invention.

### Multimetallic Catalyst and Forming Multimetallic Catalyst from Reactants at least Partially in the Solid State

In various aspects, another option for a bulk multimetallic catalyst is to use a bulk multimetallic catalyst comprised of at least one Group VIII non-noble metal and at least two Group VIB metals and wherein the ratio of Group VIB metal to Group VIII non-noble metal is from about 10:1 to about 1:10. It is preferred that the catalyst be a bulk trimetallic catalyst comprised of one Group VIII non-noble metal, preferably Ni or Co and the two Group VIB metals Mo and W. It is preferred that the ratio of Mo to W be about 9:1 to about 1:9.

The preferred bulk trimetallic catalyst compositions used in the practice of the present invention is represented by the formula:

(X)_{b}(Mo)_{c}(W)_{d}Oₓ

wherein X is one or more Group VIII non-noble metal, the molar ratio of b:(c+d) is 0.5/1 to 3/1, preferably 0.75/1 to 1.5/1, more preferably 0.75/1 to 1.25/1; The molar ratio of c:d is preferably >0.01/1, more preferably >0.1/1, still more preferably 1/10 to 10/1, still more preferably 1/3 to 3/1, most preferably substantially equimolar amounts of Mo and W, e.g., 2/3 to 3/2; and z=[2b+6(c+d)]/2.

The essentially amorphous material has a unique X-ray diffraction pattern showing crystalline peaks at d=2.53 Angstroms and d=1.70 Angstroms.

The mixed metal oxide is readily produced by the decomposition of a precursor having the formula:

(NH₄)ₐ(X)_{b}(Mo)_{c}(W)_{d}Oₓ

wherein the molar ratio of a: b is ≤ 1.0/1, preferably 0-1; and b, c, and d, are as defined above, and z=[a+2b+6(c+d)]/2. The precursor has similar peaks at d=2.53 and 1.70 Angstroms.

Decomposition of the precursor may be effected at elevated temperatures, e.g., temperatures of at least about 300°C., preferably about 300-450°C, in a suitable atmosphere, e.g., inerts such as nitrogen, argon, or steam, until decomposition is substantially complete, i.e., the ammonium is substantially completely driven off. Substantially complete decomposition can be readily established by thermogravimetric analysis (TGA), i.e., flattening of the weight change curve.

The catalyst compositions used in the practice of the present invention can be prepared by a method wherein not all of the metals are in solution. Generally, the contacting of the metal components in the presence of the protic liquid comprises mixing the metal component and subsequently reacting the resulting mixture. It is essential to the solid route that at least one metal components is added at least partly in the solid state during the mixing step and that the metal of at least one of the metal components which have been added at least partly in the solid state, remains at least partly in the solid state during the mixing and reaction step. "Metal" in this context does not mean the metal in its metallic form but present in a metal compound, such as the metal component as initially applied or as present in the bulk catalyst composition.

Generally, during the mixing step either at least one metal component is added at least partly in the solid state and at least one metal component is added in the solute state, or all metal components are added at least partly in the solid state, wherein at least one of the metals of the metal components which are added at least partly in the solid state remains at least partly in the solid state during the entire process of the solid route. That a metal component is added "in the solute state" means that the whole amount of this metal component is added as a solution of this metal component in the protic liquid. That a metal component is added "at least partly in the solid state" means that at least part of the metal component is added as solid metal component and, optionally, another part of the metal component is added as a solution of this metal component in the protic liquid. A typical example is a suspension of a metal component in a protic liquid in which the metal is at least partly present as a solid, and optionally partly dissolved in the protic liquid.

To obtain a bulk catalyst composition with high catalytic activity, it is therefore preferred that the metal components, which are at least partly in the solid state during contacting, are porous metal components. It is desired that the total pore volume and pore size distribution of these metal components is approximately the same as those of conventional hydrotreating catalysts. Conventional hydrotreating catalysts generally have a pore volume of 0.05-5 ml/g, preferably of 0.1-4 ml/g, more preferably of 0.1-3 ml/g and most preferably of 0.1-2 ml/g determined by nitrogen adsorption. Pores with a diameter smaller than 1 nm are generally not present in conventional hydrotreating catalysts. Further, conventional hydrotreating catalysts have generally a surface area of at least 10 m²/g and more preferably of at least 50 m²/g and most preferably of at least 100 m²/g, determined via the B.E.T. method. For instance, nickel carbonate can be chosen which has a total pore volume of 0.19-0.39 ml/g and preferably of 0.24-0.35 ml/g determined by nitrogen adsorption and a surface area of 150-400 m²/g and more preferably of 200-370 m²/g determined by the B.E.T. method. Furthermore these metal components should have a median particle diameter of at least 50 nm, more preferably at least 100 nm, and preferably not more than 5000 µm and more preferably not more than 3000 µm. Even more preferably, the median particle diameter lies in the range of 0.1-50 µm and most preferably in the range of 0.5-50 µm. For instance, by choosing a metal component which is added at least partly in the solid state and which has a large median particle diameter, the other metal components will only react with the outer layer of the large metal component particle. In this case, so-called "core-shell" structured bulk catalyst particles are obtained.

An appropriate morphology and texture of the metal component can either be achieved by applying suitable preformed metal components or by preparing these metal components by the above-described precipitation under such conditions that a suitable morphology and texture is obtained. A proper selection of appropriate precipitation conditions can be made by routine experimentation.

As has been set out above, to retain the morphology and texture of the metal components which are added at least partly in the solid state, it is essential that the metal of the metal component at least partly remains in the solid state during the whole process of this solid route. It is noted again that it is essential that in no case should the amount of solid metals during the process of the solid route becomes zero. The presence of solid metal comprising particles can easily be detected by visual inspection at least if the diameter of the solid particles in which the metals are comprised is larger than the wavelength of visible light. Of course, methods such as quasi-elastic light scattering (QELS) or near forward scattering which are known to the skilled person can also be used to ensure that in no point in time of the process of the solid route, all metals are in the solute state.

The protic liquid to be applied in the solid or solution route for preparing catalyst can be any protic liquid. Examples include water, carboxylic acids, and alcohols such as methanol or ethanol. Preferably, a liquid comprising water such as mixtures of an alcohol and water and more preferably water is used as protic liquid in this solid route. Also different protic liquids can be applied simultaneously in the solid route. For instance, it is possible to add a suspension of a metal component in ethanol to an aqueous solution of another metal component.

The Group VIB metal generally comprises chromium, molybdenum, tungsten, or mixtures thereof. Suitable Group VIII non-noble metals are, e.g., iron, cobalt, nickel, or mixtures thereof. Preferably, a combination of metal components comprising nickel, molybdenum and tungsten or nickel, cobalt, molybdenum and tungsten is applied in the process of the solid route. If the protic liquid is water, suitable nickel components which are at least partly in the solid state during contacting comprise water-insoluble nickel components such as nickel carbonate, nickel hydroxide, nickel phosphate, nickel phosphite, nickel formate, nickel sulfide, nickel molybdate, nickel tungstate, nickel oxide, nickel alloys such as nickel-molybdenum alloys, Raney nickel, or mixtures thereof. Suitable molybdenum components, which are at least partly in the solid state during contacting, comprise water-insoluble molybdenum components such as molybdenum (di- and tri) oxide, molybdenum carbide, molybdenum nitride, aluminum molybdate, molybdic acid (e.g. H₂MoO₄), molybdenum sulfide, or mixtures thereof. Finally, suitable tungsten components which are at least partly in the solid state during contacting comprise tungsten di- and trioxide, tungsten sulfide (WS₂ and WS₃), tungsten carbide, tungstic acid (e.g. H₂WO₄--H₂O, H₂W₂O₃-H₂O), tungsten nitride, aluminum tungstate (also meta-, or polytungstate) or mixtures thereof. These components are generally commercially available or can be prepared by, e.g., precipitation. e.g., nickel carbonate can be prepared from a nickel chloride, sulfate, or nitrate solution by adding an appropriate amount of sodium carbonate. It is generally known to the skilled person to choose the precipitation conditions in such a way as to obtain the desired morphology and texture.

In general, metal components, which mainly contain C, O, and/or H besides the metal, are preferred because they are less detrimental to the environment. Nickel carbonate is a preferred metal component to be added at least partly in the solid state because when nickel carbonate is applied, CO₂ evolves and positively influences the pH of the reaction mixture. Further, due to the transformation of carbonate into CO₂, the carbonate does not end up in the wastewater.

Preferred nickel components which are added in the solute state are water-soluble nickel components, e.g. nickel nitrate, nickel sulfate, nickel acetate, nickel chloride, or mixtures thereof. Preferred molybdenum and tungsten components which are added in the solute state are water-soluble molybdenum and tungsten components such as alkali metal or ammonium molybdate (also peroxo-, di-, tri-, tetra-, hepta-, octa-, or tetradecamolybdate), Mo--P heteropolyanion compounds, Wo-Si heteropolyanion compounds, W--P heteropolyanion compounds, W--Si heteropolyanion compounds, Ni--Mo--W heteropolyanion compounds, Co-Mo--W heteropolyanion compounds, alkali metal or ammonium tungstates (also meta-, para-, hexa-, or polytungstate), or mixtures thereof.

Preferred combinations of metal components are nickel carbonate, tungstic acid and molybdenum oxide. Another preferred combination is nickel carbonate, ammonium dimolybdate and ammonium metatungstate. It is within the scope of the skilled person to select further suitable combinations of metal components. It must be noted that nickel carbonate always comprises a certain amount of hydroxy-groups. It is preferred that the amount of hydroxy-groups present in the nickel carbonate be high.

An alternative method of preparing the catalysts used in the practice of the present invention is to prepare the bulk catalyst composition by a process comprising reacting in a reaction mixture a Group VIII non-noble metal component in solution and a Group VIB metal component in solution to obtain a precipitate. As in the case of the solid route, preferably, one Group VIII non-noble metal component is reacted with two Group VIB metal components. The molar ratio of Group VIB metals to Group VIII non-noble metals applied in the process of the solution route is preferably the same as described for the solid route. Suitable Group VIB and Group VIII non-noble metal components are, e.g. those water-soluble nickel, molybdenum and tungsten components described above for the solid route. Further Group VIII non-noble metal components are, e.g., cobalt or iron components. Further Group VIB metal components are, e.g. chromium components. The metal components can be added to the reaction mixture in solution, suspension or as such. If soluble salts are added as such, they will dissolve in the reaction mixture and subsequently be precipitated. Suitable Group VIB metal salts which are soluble in water are ammonium salts such as ammonium dimolybdate, ammonium tri-, tetra-, hepta-, octa-, and tetradeca-molybdate, ammonium para-, meta-, hexa-, and polytungstate, alkali metal salts, silicic acid salts of Group VIB metals such as molybdic silicic acid, molybdic silicic tungstic acid, tungstic acid, metatungstic acid, pertungstic acid, heteropolyanion compounds of Mo--P, Mo--Si, W--P, and W--Si. It is also possible to add Group VIB metal-containing compounds which are not in solution at the time of addition, but where solution is effected in the reaction mixture. Examples of these compounds are metal compounds which contain so much crystal water that upon temperature increase they will dissolve in their own metal water. Further, non-soluble metal salts may be added in suspension or as such, and solution is effected in the reaction mixture. Suitable non-soluble metals salts are heteropolyanion compounds of Co--Mo--W (moderately soluble in cold water), heteropolyanion compounds of Ni--Mo--W (moderately soluble in cold water).

The reaction mixture is reacted to obtain a precipitate. Precipitation is effected by adding a Group VIII non-noble metal salt solution at a temperature and pH at which the Group VIII non-noble metal and the Group VIB metal precipitate, adding a compound which complexes the metals and releases the metals for precipitation upon temperature increase or pH change or adding a Group VIB metal salt solution at a temperature and pH at which the Group VIII non-noble metal and Group VIB metal precipitate, changing the temperature, changing the pH, or lowering the amount of the solvent. The precipitate obtained with this process appears to have high catalytic activity. In contrast to the conventional hydroprocessing catalysts, which usually comprise a carrier impregnated with Group VIII non-noble metals and Group VIB metals, said precipitate can be used without a support. Unsupported catalyst compositions are usually referred to as bulk catalysts. Changing the pH can be done by adding base or acid to the reaction mixture, or adding compounds, which decompose upon temperature, increase into hydroxide ions or H+ ions that respectively increase or decrease the pH. Examples of compounds that decompose upon temperature increase and thereby Increase or decrease the pH are urea, nitrites, ammonium cyanate, ammonium hydroxide, and ammonium carbonate.

In an illustrative process according to the solution route, solutions of ammonium salts of a Group VIB metal are made and a solution of a Group VIII non-noble metal nitrate is made. Both solutions are heated to a temperature of approximately 90°C. Ammonium hydroxide is added to the Group VIB metal solution. The Group VIII non-noble metal solution is added to the Group VIB metal solution and direct precipitation of the Group VIB and Group VIII non-noble metal components occurs. This process can also be conducted at lower temperature and/or decreased pressure or higher temperature and/or increased pressure.

In another illustrative process according to the solution route, a Group VIB metal salt, a Group VIII metal salt, and ammonium hydroxide are mixed in solution together and heated so that ammonia is driven off and the pH is lowered to a pH at which precipitation occurs. For instance when nickel, molybdenum, and tungsten components are applied, precipitation typically occurs at a pH below 7.

The bulk catalyst composition can generally be directly shaped into hydroprocessing particles. If the amount of liquid of the bulk catalyst composition is so high that it cannot be directly subjected to a shaping step, a solid liquid separation can be performed before shaping. Optionally the bulk catalyst composition, either as such or after solid liquid separation, can be calcined before shaping.

The median diameter of the bulk catalyst particles is at least 50 nm, more preferably at least 100 nm, and preferably not more than 5000 µm and more preferably not more than 3000 µm. Even more preferably, the median particle diameter lies in the range of 0.1-50 µm and most preferably in the range of 0.5-50 µm.

If a binder material is used in the preparation of the catalyst composition it can be any material that is conventionally applied as a binder in hydroprocessing catalysts. Examples include silica, silica-alumina, such as conventional silica-alumina, silica-coated alumina and alumina-coated silica, alumina such as (pseudo)boehmite, or gibbsite, titania, zirconia, cationic clays or anionic clays such as saponite, bentonite, kaoline, sepiolite or hydrotalcite, or mixtures thereof. Preferred binders are silica, silica-alumina, alumina, titanic, zirconia, or mixtures thereof. These binders may be applied as such or after peptization. It is also possible to apply precursors of these binders that, during the process of the invention are converted into any of the above-described binders. Suitable precursors are, e g., alkali metal aluminates (to obtain an alumina binder), water glass (to obtain a silica binder), a mixture of alkali metal aluminates and water glass (to obtain a silica alumina binder), a mixture of sources of a di-, tri-, and/or tetravalent metal such as a mixture of water-soluble salts of magnesium, aluminum and/or silicon (to prepare a cationic clay and/or anionic clay), chlorohydrol, aluminum sulfate, or mixtures thereof.

If desired, the binder material may be composited with a Group VIB metal and/or a Group VIII non-noble metal, prior to being composited with the bulk catalyst composition and/or prior to being added during the preparation thereof. Compositing the binder material with any of these metals may be carried out by impregnation of the solid binder with these materials. The person skilled in the art knows suitable impregnation techniques. If the binder is peptized, it is also possible to carry out the peptization in the presence of Group VIB and/or Group VIII non-noble metal components.

Generally, the binder material optionally added in the process of the invention has less catalytic activity than the bulk catalyst composition or no catalytic activity at all. Consequently, by adding a binder material, the activity of the bulk catalyst composition may be reduced. Therefore, the amount of binder material optionally added in the process of the invention generally depends on the desired activity of the final catalyst composition. Binder amounts from 0-95 wt. % of the total composition can be suitable, depending on the envisaged catalytic application. However, to take advantage of the resulting unusual high activity of the composition of the present invention, binder amounts optionally added are generally in the range of 0.5-75 wt. % of the total composition.

The catalyst composition can be directly shaped. Shaping comprises extrusion, pelletizing, beading, and/or spray drying. It must be noted that if the catalyst composition is to be applied in slurry type reactors, fluidized beds, moving beds, expanded beds, or ebullating beds, spray drying or beading is generally applied for fixed bed applications, generally, the catalyst composition is extruded, pelletized and/or beaded. In the latter case, prior to or during the shaping step, any additives that are conventionally used to facilitate shaping can be added. These additives may comprise aluminum stearate, surfactants, graphite or mixtures thereof. These additives can be added at any stage prior to the shaping step. Further, when alumina is used as a binder, it may be desirable to add acids prior to the shaping step such as nitric acid to increase the mechanical strength of the extrudates.

It is preferred that a binder material is added prior to the shaping step. Further, it is preferred that the shaping step is carried out in the presence of a liquid, such as water. Preferably, the amount of liquid in the extrusion mixture, expressed as LOI is in the range of 20-80%.

The resulting shaped catalyst composition can, after an optional drying step, be optionally calcined. Calcination however is not essential to the process of the invention. If a calcination is carried out in the process of the invention, it can be done at a temperature of, e.g., from 100-600°C and preferably 350 to 500°C for a time varying from 0.5 to 48 hours. The drying of the shaped particles is generally carried out at temperatures above 100°C.

In a preferred embodiment of the invention, the catalyst composition is subjected to spray drying (flash) drying, milling, kneading, or combinations thereof prior to shaping. These additional process steps can be conducted either before or after a binder is added, after solid-liquid separation, before or after calcination and subsequent to re-wetting. It is believed that by applying any of the above-described techniques of spray drying, (flash) drying, milling, kneading, or combinations thereof, the degree of mixing between the bulk catalyst composition and the binder material is improved. This applies to both cases where the binder material is added before or after the application of any of the above-described methods. However, it is generally preferred to add the binder material prior to spray drying and/or any alternative technique. If the binder is added subsequent to spray drying and/or any alternative technique, the resulting composition is preferably thoroughly mixed by any conventional technique prior to shaping. An advantage of, e.g., spray drying is that no wastewater streams are obtained when this technique is applied.

The processes of the present invention for preparing the bulk catalyst compositions comprise a sulfidation step. Sulfidation is generally carried out by contacting the catalyst composition or precursors thereof with a sulfur containing compound such as elementary sulfur, hydrogen sulfide or polysulfides. The sulfidation can generally be carried out subsequently to the preparation of the bulk catalyst composition but prior to the addition of a binder material, and/or subsequently to the addition of the binder material but prior to subjecting the catalyst composition to spray drying and/or any alternative method, and/or subsequently to subjecting the composition to spray drying and/or any alternative method but prior to shaping, and/or subsequently to shaping the catalyst composition. It is preferred that the sulfidation is not carried out prior to any process step that reverts the obtained metal sulfides into their oxides. Such process steps are, e.g., calcination or spray drying or any other high temperature treatment in the presence of oxygen. Consequently, if the catalyst composition is subjected to spray drying and/or any alternative technique, the sulfidation should be carried out subsequent to the application of any of these methods.

Additionally to, or instead of, a sulfidation step, the bulk catalyst composition may be prepared from at least one metal sulfide. If, e.g. the solid route is applied in step (i), the bulk catalyst component can be prepared form nickel sulfide and/or molybdenum sulfide and/or tungsten sulfide.

### Additional components for bulk catalysts

The sulfided catalyst composition described above can be used as a hydroprocessing catalyst, either alone or in combination with a binder. If the sulfided catalyst composition is a bulk catalyst, then only a relatively small amount of binder may be added. However, if the sulfided catalyst composition is a heterogeneous/supported catalyst, then usually the binder is a significant portion of the catalyst composition, e.g., at least about 40 wt %, at least about 50 wt %, at least about 60 wt %, or at least about 70 wt %; additionally or alternately for heterogeneous/supported catalysts, the binder can comprise up to about 95 wt % of the catalyst composition, e.g., up to about 90 wt %, up to about 85 wt %, up to about 80 wt %, up to about 75 wt %, or up to about 70 wt %. Non-limiting examples of suitable binder materials can include, but are not limited to, silica, silica-alumina (e.g., conventional silica-alumina, silica-coated alumina, alumina-coated silica, or the like, or a combination thereof), alumina (e.g., boehmite, pseudo-boehmite, gibbsite, or the like, or a combination thereof), titania, zirconia, cationic clays or anionic clays (e.g., saponite, bentonite, kaoline, sepiolite, hydrotalcite, or the like, or a combination thereof), and mixtures thereof. In some preferred embodiments, the binder can include silica, silica-alumina, alumina, titania, zirconia, and mixtures thereof. These binders may be applied as such or after peptization. It may also be possible to apply precursors of these binders that, during precursor synthesis, can be converted into any of the above-described binders. Suitable precursors can include, e.g., alkali metal aluminates (alumina binder), water glass (silica binder), a mixture of alkali metal aluminates and water glass (silica-alumina binder), a mixture of sources of a di-, tri-, and/or tetravalent metal, such as a mixture of water-soluble salts of magnesium, aluminum, and/or silicon (cationic clay and/or anionic clay), chlorohydrol, aluminum sulfate, or mixtures thereof.

Generally, the binder material to be used can have lower catalytic activity than the remainder of the catalyst composition, or can have substantially no catalytic activity at all (less than about 5%, based on the catalytic activity of the bulk catalyst composition being about 100%). Consequently, by using a binder material, the activity of the catalyst composition may be reduced. Therefore, the amount of binder material to be used, at least in bulk catalysts, can generally depend on the desired activity of the final catalyst composition. Binder amounts up to about 25 wt % of the total composition can be suitable (when present, from above 0 wt % to about 25 wt %), depending on the envisaged catalytic application. However, to take advantage of the resulting unusual high activity of bulk catalyst compositions according to the invention, binder amounts, when added, can generally be from about 0.5 wt % to about 20 wt % of the total catalyst composition.

If desired in bulk catalyst cases, the binder material can be composited with a source of a Group 6 metal and/or a source of a non-noble Group 8-10 metal, prior to being composited with the bulk catalyst composition and/or prior to being added during the preparation thereof. Compositing the binder material with any of these metals may be carried out by any known means, e.g., impregnation of the (solid) binder material with these metal(s) sources.

A cracking component may also be added during catalyst preparation. When used, the cracking component can represent from about 0.5 wt % to about 30 wt %, based on the total weight of the catalyst composition. The cracking component may serve, for example, as an isomerization enhancer. Conventional cracking components can be used, e.g., a cationic clay, an anionic clay, a zeolite (such as ZSM-5, zeolite Y, ultra-stable zeolite Y, zeolite X, an AlPO, a SAPO, or the like, or a combination thereof), amorphous cracking components (such as silica-alumina or the like), or a combination thereof. It is to be understood that some materials may act as a binder and a cracking component at the same time. For instance, silica-alumina may simultaneously have both a cracking and a binding function.

If desired, the cracking component may be composited with a Group 6 metal and/or a Group 8-10 non-noble metal, prior to being composited with the catalyst composition and/or prior to being added during the preparation thereof. Compositing the cracking component with any of these metals may be carried out by any known means, e.g., impregnation of the cracking component with these metal(s) sources. When both a cracking component and a binder material are used and when compositing of additional metal components is desired on both, the compositing may be done on each component separately or may be accomplished by combining the components and doing a single compositing step.

The selection of particular cracking components, if any, can depend on the intended catalytic application of the final catalyst composition. For instance, a zeolite can be added if the resulting composition is to be applied in hydrocracking or fluid catalytic cracking. Other cracking components, such as silica-alumina or cationic clays, can be added if the final catalyst composition is to be used in hydrotreating applications. The amount of added cracking material can depend on the desired activity of the final composition and the intended application, and thus, when present, may vary from above 0 wt % to about 80 wt %, based on the total weight of the catalyst composition. In a preferred embodiment, the combination of cracking component and binder material can comprise less than 50 wt % of the catalyst composition, for example, less than about 40 wt %, less than about 30 wt %, less than about 20 wt %, less than about 15 wt %, or less than about 10 wt %.

If desired, further materials can be added, in addition to the metal components already added, such as any material that would be added during conventional hydroprocessing catalyst preparation. Suitable examples of such further materials can include, but are not limited to, phosphorus compounds, boron compounds, fluorine-containing compounds, sources of additional transition metals, sources of rare earth metals, fillers, or mixtures thereof.

### Hydrotreating and Hydrocracking

After deasphalting, the deasphalted oil (and any additional fractions combined with the deasphalted oil) can undergo further processing to form lubricant base stocks. This can include hydrotreatment and/or hydrocracking to remove heteroatoms to desired levels, reduce Conradson Carbon content, and/or provide viscosity index (VI) uplift. Depending on the aspect, a deasphalted oil can be hydroprocessed by hydrotreating, hydrocracking, or hydrotreating and hydrocracking. Optionally, one or more catalyst beds and/or stages of demetallization catalyst can be included prior to the initial bed of hydrotreating and/or hydrocracking catalyst. Optionally, the hydroprocessing can further include exposing the deasphalted oil to a base metal aromatic saturation catalyst. It is noted that a base metal aromatic saturation catalyst can sometimes be similar to a lower activity hydrotreating catalyst.

The deasphalted oil can be hydrotreated and/or hydrocracked with little or no solvent extraction being performed prior to and/or after the deasphalting. As a result, the deasphalted oil feed for hydrotreatment and/or hydrocracking can have a substantial aromatics content. In various aspects, the aromatics content of the deasphalted oil feed can be at least 50 wt%, or at least 55 wt%, or at least 60 wt%, or at least 65 wt%, or at least 70 wt%, or at least 75 wt%, such as up to 90 wt% or more. Additionally or alternately, the saturates content of the deasphalted oil feed can be 50 wt% or less, or 45 wt% or less, or 40 wt% or less, or 35 wt% or less, or 30 wt% or less, or 25 wt% or less, such as down to 10 wt% or less. In this discussion and the claims below, the aromatics content and/or the saturates content of a fraction can be determined based on ASTM D7419.

The reaction conditions during demetallization and/or hydrotreatment and/or hydrocracking of the deasphalted oil (and optional vacuum gas oil co-feed) can be selected to generate a desired level of conversion of a feed. Any convenient type of reactor, such as fixed bed (for example trickle bed) reactors can be used. Conversion of the feed can be defined in terms of conversion of molecules that boil above a temperature threshold to molecules below that threshold. The conversion temperature can be any convenient temperature, such as ∼700°F (370°C) or 1050°F (566°C). The amount of conversion can correspond to the total conversion of molecules within the combined hydrotreatment and hydrocracking stages for the deasphalted oil. Suitable amounts of conversion of molecules boiling above 1050°F (566°C) to molecules boiling below 566°C include 30 wt% to 90 wt% conversion relative to 566°C, or 30 wt% to 80 wt%, or 30 wt% to 70 wt%, or 40 wt% to 90 wt%, or 40 wt% to 80 wt%, or 40 wt% to 70 wt%, or 50 wt% to 90 wt%, or 50 wt% to 80 wt%, or 50 wt% to 70 wt%. In particular, the amount of conversion relative to 566°C can be 30 wt% to 90 wt%, or 30 wt% to 70 wt%, or 50 wt% to 90 wt%. Additionally or alternately, suitable amounts of conversion of molecules boiling above ∼700°F (370°C) to molecules boiling below 370°C include 10 wt% to 70 wt% conversion relative to 370°C, or 10 wt% to 60 wt%, or 10 wt% to 50 wt%, or 20 wt% to 70 wt%, or 20 wt% to 60 wt%, or 20 wt% to 50 wt%, or 30 wt% to 70 wt%, or 30 wt% to 60 wt%, or 30 wt% to 50 wt%. In particular, the amount of conversion relative to 370°C can be 10 wt% to 70 wt%, or 20 wt% to 50 wt%, or 30 wt% to 60 wt%.

The hydroprocessed deasphalted oil can also be characterized based on the product quality. After hydroprocessing (hydrotreating and/or hydrocracking), the hydroprocessed deasphalted oil can have a sulfur content of 200 wppm or less, or 100 wppm or less, or 50 wppm or less (such as down to ∼0 wppm). Additionally or alternately, the hydroprocessed deasphalted oil can have a nitrogen content of 200 wppm or less, or 100 wppm or less, or 50 wppm or less (such as down to ∼0 wppm). Additionally or alternately, the hydroprocessed deasphalted oil can have a Conradson Carbon residue content of 1.5 wt% or less, or 1.0 wt% or less, or 0.7 wt% or less, or 0.1 wt% or less, or 0.02 wt% or less (such as down to ∼0 wt%). Conradson Carbon residue content can be determined according to ASTM D4530.

In various aspects, a feed can initially be exposed to a demetallization catalyst prior to exposing the feed to a hydrotreating catalyst. Deasphalted oils can have metals concentrations (Ni + V + Fe) on the order of 10 - 100 wppm. Exposing a conventional hydrotreating catalyst to a feed having a metals content of 10 wppm or more can lead to catalyst deactivation at a faster rate than may desirable in a commercial setting. Exposing a metal containing feed to a demetallization catalyst prior to the hydrotreating catalyst can allow at least a portion of the metals to be removed by the demetallization catalyst, which can reduce or minimize the deactivation of the hydrotreating catalyst and/or other subsequent catalysts in the process flow. Commercially available demetallization catalysts can be suitable, such as large pore amorphous oxide catalysts that may optionally include Group VI and/or Group VIII non-noble metals to provide some hydrogenation activity.

In various aspects, the deasphalted oil can be exposed to a hydrotreating catalyst under effective hydrotreating conditions. The catalysts used can include conventional hydroprocessing catalysts, such as those comprising at least one Group VIII non-noble metal (Columns 8 - 10 of IUPAC periodic table), preferably Fe, Co, and/or Ni, such as Co and/or Ni; and at least one Group VI metal (Column 6 of IUPAC periodic table), preferably Mo and/or W. Such hydroprocessing catalysts optionally include transition metal sulfides that are impregnated or dispersed on a refractory support or carrier such as alumina and/or silica. The support or carrier itself typically has no significant/measurable catalytic activity. Substantially carrier- or support-free catalysts, commonly referred to as bulk catalysts, generally have higher volumetric activities than their supported counterparts.

The catalysts can either be in bulk form or in supported form. In addition to alumina and/or silica, other suitable support/carrier materials can include, but are not limited to, zeolites, titania, silica-titania, and titania-alumina. Suitable aluminas are porous aluminas such as gamma or eta having average pore sizes from 50 to 200 Å, or 75 to 150 Å; a surface area from 100 to 300 m²/g, or 150 to 250 m²/g; and a pore volume of from 0.25 to 1.0 cm³/g, or 0.35 to 0.8 cm³/g. More generally, any convenient size, shape, and/or pore size distribution for a catalyst suitable for hydrotreatment of a distillate (including lubricant base stock) boiling range feed in a conventional manner may be used. Preferably, the support or carrier material is an amorphous support, such as a refractory oxide. Preferably, the support or carrier material can be free or substantially free of the presence of molecular sieve, where substantially free of molecular sieve is defined as having a content of molecular sieve of less than about 0.01 wt%.

The at least one Group VIII non-noble metal, in oxide form, can typically be present in an amount ranging from about 2 wt% to about 40 wt%, preferably from about 4 wt% to about 15 wt%. The at least one Group VI metal, in oxide form, can typically be present in an amount ranging from about 2 wt% to about 70 wt%, preferably for supported catalysts from about 6 wt% to about 40 wt% or from about 10 wt% to about 30 wt%. These weight percents are based on the total weight of the catalyst. Suitable metal catalysts include cobalt/molybdenum (1-10% Co as oxide, 10-40% Mo as oxide), nickel/molybdenum (1-10% Ni as oxide, 10-40% Co as oxide), or nickel/tungsten (1-10% Ni as oxide, 10-40% W as oxide) on alumina, silica, silica-alumina, or titania.

The hydrotreatment is carried out in the presence of hydrogen. A hydrogen stream is, therefore, fed or injected into a vessel or reaction zone or hydroprocessing zone in which the hydroprocessing catalyst is located. Hydrogen, which is contained in a hydrogen "treat gas," is provided to the reaction zone. Treat gas, as referred to in this invention, can be either pure hydrogen or a hydrogen-containing gas, which is a gas stream containing hydrogen in an amount that is sufficient for the intended reaction(s), optionally including one or more other gasses (e.g., nitrogen and light hydrocarbons such as methane). The treat gas stream introduced into a reaction stage will preferably contain at least about 50 vol. % and more preferably at least about 75 vol. % hydrogen. Optionally, the hydrogen treat gas can be substantially free (less than 1 vol%) of impurities such as H₂S and NH₃ and/or such impurities can be substantially removed from a treat gas prior to use.

Hydrogen can be supplied at a rate of from about 100 SCF/B (standard cubic feet of hydrogen per barrel of feed) (17 Nm³/m³) to about 10000 SCF/B (1700 Nm³/m³). Preferably, the hydrogen is provided in a range of from about 200 SCF/B (34 Nm³/m³) to about 2500 SCF/B (420 Nm³/m³). Hydrogen can be supplied co-currently with the input feed to the hydrotreatment reactor and/or reaction zone or separately via a separate gas conduit to the hydrotreatment zone.

Hydrotreating conditions can include temperatures of 200°C to 450°C, or 315°C to 425°C; pressures of 250 psig (1.8 MPag) to 5000 psig (34.6 MPag) or 300 psig (2.1 MPag) to 3000 psig (20.8 MPag); liquid hourly space velocities (LHSV) of 0.1 hr⁻¹ to 10 hr⁻¹; and hydrogen treat rates of 200 scf/B (35.6 m³/m³) to 10,000 scf/B (1781 m³/m³), or 500 (89 m³/m³) to 10,000 scf/B (1781 m³/m³).

In various aspects, the deasphalted oil can be exposed to a hydrocracking catalyst under effective hydrocracking conditions. Hydrocracking catalysts typically contain sulfided base metals on acidic supports, such as amorphous silica alumina, cracking zeolites such as USY, or acidified alumina. Often these acidic supports are mixed or bound with other metal oxides such as alumina, titania or silica. Examples of suitable acidic supports include acidic molecular sieves, such as zeolites or silicoaluminophophates. One example of suitable zeolite is USY, such as a USY zeolite with cell size of 24.30 Angstroms or less. Additionally or alternately, the catalyst can be a low acidity molecular sieve, such as a USY zeolite with a Si to Al ratio of at least about 20, and preferably at least about 40 or 50. ZSM-48, such as ZSM-48 with a SiO₂ to Al₂O₃ ratio of about 110 or less, such as about 90 or less, is another example of a potentially suitable hydrocracking catalyst. Still another option is to use a combination of USY and ZSM-48. Still other options include using one or more of zeolite Beta, ZSM-5, ZSM-35, or ZSM-23, either alone or in combination with a USY catalyst. Non-limiting examples of metals for hydrocracking catalysts include metals or combinations of metals that include at least one Group VIII metal, such as nickel, nickel-cobalt-molybdenum, cobalt-molybdenum, nickel-tungsten, nickel-molybdenum, and/or nickel-molybdenum-tungsten. Additionally or alternately, hydrocracking catalysts with noble metals can also be used. Non-limiting examples of noble metal catalysts include those based on platinum and/or palladium. Support materials which may be used for both the noble and non-noble metal catalysts can comprise a refractory oxide material such as alumina, silica, alumina-silica, kieselguhr, diatomaceous earth, magnesia, zirconia, or combinations thereof, with alumina, silica, alumina-silica being the most common (and preferred, in one embodiment).

When only one hydrogenation metal is present on a hydrocracking catalyst, the amount of that hydrogenation metal can be at least about 0.1 wt% based on the total weight of the catalyst, for example at least about 0.5 wt% or at least about 0.6 wt%. Additionally or alternately when only one hydrogenation metal is present, the amount of that hydrogenation metal can be about 5.0 wt% or less based on the total weight of the catalyst, for example about 3.5 wt% or less, about 2.5 wt% or less, about 1.5 wt% or less, about 1.0 wt% or less, about 0.9 wt% or less, about 0.75 wt% or less, or about 0.6 wt% or less. Further additionally or alternately when more than one hydrogenation metal is present, the collective amount of hydrogenation metals can be at least about 0.1 wt% based on the total weight of the catalyst, for example at least about 0.25 wt%, at least about 0.5 wt%, at least about 0.6 wt%, at least about 0.75 wt%, or at least about 1 wt%. Still further additionally or alternately when more than one hydrogenation metal is present, the collective amount of hydrogenation metals can be about 35 wt% or less based on the total weight of the catalyst, for example about 30 wt% or less, about 25 wt% or less, about 20 wt% or less, about 15 wt% or less, about 10 wt% or less, or about 5 wt% or less. In embodiments wherein the supported metal comprises a noble metal, the amount of noble metal(s) is typically less than about 2 wt %, for example less than about 1 wt%, about 0.9 wt % or less, about 0.75 wt % or less, or about 0.6 wt % or less. It is noted that hydrocracking under sour conditions is typically performed using a base metal (or metals) as the hydrogenation metal.

In various aspects, the conditions selected for hydrocracking for lubricant base stock production can depend on the desired level of conversion, the level of contaminants in the input feed to the hydrocracking stage, and potentially other factors. For example, hydrocracking conditions in a single stage, or in the first stage and/or the second stage of a multi-stage system, can be selected to achieve a desired level of conversion in the reaction system. Hydrocracking conditions can be referred to as sour conditions or sweet conditions, depending on the level of sulfur and/or nitrogen present within a feed. For example, a feed with 100 wppm or less of sulfur and 50 wppm or less of nitrogen, preferably less than 25 wppm sulfur and/or less than 10 wppm of nitrogen, represent a feed for hydrocracking under sweet conditions. In various aspects, hydrocracking can be performed on a thermally cracked resid, such as a deasphalted oil derived from a thermally cracked resid. In some aspects, such as aspects where an optional hydrotreating step is used prior to hydrocracking, the thermally cracked resid may correspond to a sweet feed. In other aspects, the thermally cracked resid may represent a feed for hydrocracking under sour conditions.

A hydrocracking process under sour conditions can be carried out at temperatures of about 550°F (288°C) to about 840°F (449°C), hydrogen partial pressures of from about 1500 psig to about 5000 psig (10.3 MPag to 34.6 MPag), liquid hourly space velocities of from 0.05 h⁻¹ to 10 h⁻¹, and hydrogen treat gas rates of from 35.6 m³/m³ to 1781 m³/m³ (200 SCF/B to 10,000 SCF/B). In other embodiments, the conditions can include temperatures in the range of about 600°F (343°C) to about 815°F (435°C), hydrogen partial pressures of from about 1500 psig to about 3000 psig (10.3 MPag-20.9 MPag), and hydrogen treat gas rates of from about 213 m³/m³ to about 1068 m³/m³ (1200 SCF/B to 6000 SCF/B). The LHSV can be from about 0.25 h⁻¹ to about 50 h⁻¹, or from about 0.5 h⁻¹ to about 20 h⁻¹, preferably from about 1.0 h⁻¹ to about 4.0 h⁻¹.

In some aspects, a portion of the hydrocracking catalyst can be contained in a second reactor stage. In such aspects, a first reaction stage of the hydroprocessing reaction system can include one or more hydrotreating and/or hydrocracking catalysts. The conditions in the first reaction stage can be suitable for reducing the sulfur and/or nitrogen content of the feedstock. A separator can then be used in between the first and second stages of the reaction system to remove gas phase sulfur and nitrogen contaminants. One option for the separator is to simply perform a gas-liquid separation to remove contaminant. Another option is to use a separator such as a flash separator that can perform a separation at a higher temperature. Such a high temperature separator can be used, for example, to separate the feed into a portion boiling below a temperature cut point, such as about 350°F (177°C) or about 400°F (204°C), and a portion boiling above the temperature cut point. In this type of separation, the naphtha boiling range portion of the effluent from the first reaction stage can also be removed, thus reducing the volume of effluent that is processed in the second or other subsequent stages. Of course, any low boiling contaminants in the effluent from the first stage would also be separated into the portion boiling below the temperature cut point. If sufficient contaminant removal is performed in the first stage, the second stage can be operated as a "sweet" or low contaminant stage.

Still another option can be to use a separator between the first and second stages of the hydroprocessing reaction system that can also perform at least a partial fractionation of the effluent from the first stage. In this type of aspect, the effluent from the first hydroprocessing stage can be separated into at least a portion boiling below the distillate (such as diesel) fuel range, a portion boiling in the distillate fuel range, and a portion boiling above the distillate fuel range. The distillate fuel range can be defined based on a conventional diesel boiling range, such as having a lower end cut point temperature of at least about 350°F (177°C) or at least about 400°F (204°C) to having an upper end cut point temperature of about 700°F (371°C) or less or 650°F (343°C) or less. Optionally, the distillate fuel range can be extended to include additional kerosene, such as by selecting a lower end cut point temperature of at least about 300°F (149°C).

In aspects where the inter-stage separator is also used to produce a distillate fuel fraction, the portion boiling below the distillate fuel fraction includes, naphtha boiling range molecules, light ends, and contaminants such as H₂S. These different products can be separated from each other in any convenient manner. Similarly, one or more distillate fuel fractions can be formed, if desired, from the distillate boiling range fraction. The portion boiling above the distillate fuel range represents the potential lubricant base stocks. In such aspects, the portion boiling above the distillate fuel range is subjected to further hydroprocessing in a second hydroprocessing stage.

A hydrocracking process under sweet conditions can be performed under conditions similar to those used for a sour hydrocracking process, or the conditions can be different. In an embodiment, the conditions in a sweet hydrocracking stage can have less severe conditions than a hydrocracking process in a sour stage. Suitable hydrocracking conditions for a non-sour stage can include, but are not limited to, conditions similar to a first or sour stage. Suitable hydrocracking conditions can include temperatures of about 500°F (260°C) to about 840°F (449°C), hydrogen partial pressures of from about 1500 psig to about 5000 psig (10.3 MPag to 34.6 MPag), liquid hourly space velocities of from 0.05 h⁻¹ to 10 h⁻¹, and hydrogen treat gas rates of from 35.6 m³/m³ to 1781 m³/m³ (200 SCF/B to 10,000 SCF/B). In other embodiments, the conditions can include temperatures in the range of about 600°F (343°C) to about 815°F (435°C), hydrogen partial pressures of from about 1500 psig to about 3000 psig (10.3 MPag-20.9 MPag), and hydrogen treat gas rates of from about 213 m³/m³ to about 1068 m³/m³ (1200 SCF/B to 6000 SCF/B). The LHSV can be from about 0.25 h⁻¹ to about 50 h⁻¹, or from about 0.5 h⁻¹ to about 20 h⁻¹, preferably from about 1.0 h⁻¹ to about 4.0 h⁻¹.

In still another aspect, the same conditions can be used for hydrotreating and hydrocracking beds or stages, such as using hydrotreating conditions for both or using hydrocracking conditions for both. In yet another embodiment, the pressure for the hydrotreating and hydrocracking beds or stages can be the same.

In yet another aspect, a hydroprocessing reaction system may include more than one hydrocracking stage. If multiple hydrocracking stages are present, at least one hydrocracking stage can have effective hydrocracking conditions as described above, including a hydrogen partial pressure of at least about 1500 psig (10.3 MPag). In such an aspect, other hydrocracking processes can be performed under conditions that may include lower hydrogen partial pressures. Suitable hydrocracking conditions for an additional hydrocracking stage can include, but are not limited to, temperatures of about 500°F (260°C) to about 840°F (449°C), hydrogen partial pressures of from about 250 psig to about 5000 psig (1.8 MPag to 34.6 MPag), liquid hourly space velocities of from 0.05 h⁻¹ to 10 h⁻¹, and hydrogen treat gas rates of from 35.6 m³/m³ to 1781 m³/m³ (200 SCF/B to 10,000 SCF/B). In other embodiments, the conditions for an additional hydrocracking stage can include temperatures in the range of about 600°F (343°C) to about 815°F (435°C), hydrogen partial pressures of from about 500 psig to about 3000 psig (3.5 MPag-20.9 MPag), and hydrogen treat gas rates of from about 213 m³/m³ to about 1068 m³/m³ (1200 SCF/B to 6000 SCF/B). The LHSV can be from about 0.25 h⁻¹ to about 50 h⁻¹, or from about 0.5 h⁻¹ to about 20 h⁻¹, and preferably from about 1.0 h⁻¹ to about 4.0 h⁻¹.

### Additional Hydroprocessing - Hydrocracking, Catalytic Dewaxing, and Hydrofinishing

In some alternative aspects, at least a lubricant boiling range portion of the hydroprocessed deasphalted oil can be exposed to further hydroprocessing (including catalytic dewaxing) to form either Group I and/or Group II base stocks, including Group I and/or Group II bright stock. In some aspects, a first lubricant boiling range portion of the hydroprocessed deasphalted oil can be solvent dewaxed as described above while a second lubricant boiling range portion can be exposed to further hydroprocessing. In other aspects, only solvent dewaxing or only further hydroprocessing can be used to treat a lubricant boiling range portion of the hydroprocessed deasphalted oil.

Optionally, the further hydroprocessing of the lubricant boiling range portion of the hydroprocessed deasphalted oil can also include exposure to hydrocracking conditions before and/or after the exposure to the catalytic dewaxing conditions. At this point in the process, the hydrocracking can be considered "sweet" hydrocracking, as the hydroprocessed deasphalted oil can have a sulfur content of 200 wppm or less.

Suitable hydrocracking conditions can include exposing the feed to a hydrocracking catalyst as previously described above. Optionally, it can be preferable to use a USY zeolite with a silica to alumina ratio of at least 30 and a unit cell size of less than 24.32 Angstroms as the zeolite for the hydrocracking catalyst, in order to improve the VI uplift from hydrocracking and/or to improve the ratio of distillate fuel yield to naphtha fuel yield in the fuels boiling range product.

Suitable hydrocracking conditions can also include temperatures of about 500°F (260°C) to about 840°F (449°C), hydrogen partial pressures of from about 1500 psig to about 5000 psig (10.3 MPag to 34.6 MPag), liquid hourly space velocities of from 0.05 h⁻¹ to 10 h⁻¹, and hydrogen treat gas rates of from 35.6 m³/m³ to 1781 m³/m³ (200 SCF/B to 10,000 SCF/B). In other embodiments, the conditions can include temperatures in the range of about 600°F (343°C) to about 815°F (435°C), hydrogen partial pressures of from about 1500 psig to about 3000 psig (10.3 MPag-20.9 MPag), and hydrogen treat gas rates of from about 213 m³/m³ to about 1068 m³/m³ (1200 SCF/B to 6000 SCF/B). The LHSV can be from about 0.25 h⁻¹ to about 50 h⁻¹, or from about 0.5 h⁻¹ to about 20 h⁻¹, and preferably from about 1.0 h⁻¹ to about 4.0 h⁻¹.

For catalytic dewaxing, suitable dewaxing catalysts can include molecular sieves such as crystalline aluminosilicates (zeolites). In an embodiment, the molecular sieve can comprise, consist essentially of, or be ZSM-22, ZSM-23, ZSM-48. Optionally but preferably, molecular sieves that are selective for dewaxing by isomerization as opposed to cracking can be used, such as ZSM-48, ZSM-23, or a combination thereof. Additionally or alternately, the molecular sieve can comprise, consist essentially of, or be a 10-member ring 1-D molecular sieve, such as EU-2, EU-11, ZBM-30, ZSM-48, or ZSM-23. ZSM-48 is most preferred. Note that a zeolite having the ZSM-23 structure with a silica to alumina ratio of from about 20:1 to about 40:1 can sometimes be referred to as SSZ-32. Optionally but preferably, the dewaxing catalyst can include a binder for the molecular sieve, such as alumina, titania, silica, silica-alumina, zirconia, or a combination thereof, for example alumina and/or titania or silica and/or zirconia and/or titania.

Preferably, the dewaxing catalysts used in processes according to the invention are catalysts with a low ratio of silica to alumina. For example, for ZSM-48, the ratio of silica to alumina in the zeolite can be about 100:1 or less, such as about 90:1 or less, or about 75:1 or less, or about 70:1 or less. Additionally or alternately, the ratio of silica to alumina in the ZSM-48 can be at least about 50:1, such as at least about 60:1, or at least about 65:1.

In various embodiments, the catalysts according to the invention further include a metal hydrogenation component. The metal hydrogenation component is typically a Group VI and/or a Group VIII metal. Preferably, the metal hydrogenation component can be a combination of a non-noble Group VIII metal with a Group VI metal. Suitable combinations can include Ni, Co, or Fe with Mo or W, preferably Ni with Mo or W.

The metal hydrogenation component may be added to the catalyst in any convenient manner. One technique for adding the metal hydrogenation component is by incipient wetness. For example, after combining a zeolite and a binder, the combined zeolite and binder can be extruded into catalyst particles. These catalyst particles can then be exposed to a solution containing a suitable metal precursor. Alternatively, metal can be added to the catalyst by ion exchange, where a metal precursor is added to a mixture of zeolite (or zeolite and binder) prior to extrusion.

The amount of metal in the catalyst can be at least 0.1 wt% based on catalyst, or at least 0.5 wt%, or at least 1.0 wt%, or at least 2.5 wt%, or at least 5.0 wt%, based on catalyst. The amount of metal in the catalyst can be 20 wt% or less based on catalyst, or 10 wt% or less, or 5 wt% or less, or 2.5 wt% or less, or 1 wt% or less. For embodiments where the metal is a combination of a non-noble Group VIII metal with a Group VI metal, the combined amount of metal can be from 0.5 wt% to 20 wt%, or 1 wt% to 15 wt%, or 2.5 wt% to 10 wt%.

The dewaxing catalysts useful in processes according to the invention can also include a binder. In some embodiments, the dewaxing catalysts used in process according to the invention are formulated using a low surface area binder, a low surface area binder represents a binder with a surface area of 100 m²/g or less, or 80 m²/g or less, or 70 m²/g or less. Additionally or alternately, the binder can have a surface area of at least about 25 m²/g. The amount of zeolite in a catalyst formulated using a binder can be from about 30 wt% zeolite to 90 wt% zeolite relative to the combined weight of binder and zeolite. Preferably, the amount of zeolite is at least about 50 wt% of the combined weight of zeolite and binder, such as at least about 60 wt% or from about 65 wt% to about 80 wt%.

Without being bound by any particular theory, it is believed that use of a low surface area binder reduces the amount of binder surface area available for the hydrogenation metals supported on the catalyst. This leads to an increase in the amount of hydrogenation metals that are supported within the pores of the molecular sieve in the catalyst.

A zeolite can be combined with binder in any convenient manner. For example, a bound catalyst can be produced by starting with powders of both the zeolite and binder, combining and mulling the powders with added water to form a mixture, and then extruding the mixture to produce a bound catalyst of a desired size. Extrusion aids can also be used to modify the extrusion flow properties of the zeolite and binder mixture. The amount of framework alumina in the catalyst may range from 0.1 to 3.33 wt%, or 0.1 to 2.7 wt%, or 0.2 to 2 wt%, or 0.3 to 1 wt%.

Effective conditions for catalytic dewaxing of a feedstock in the presence of a dewaxing catalyst can include a temperature of from 280°C to 450°C, preferably 343°C to 435°C, a hydrogen partial pressure of from 3.5 MPag to 34.6 MPag (500 psig to 5000 psig), preferably 4.8 MPag to 20.8 MPag, and a hydrogen circulation rate of from 178 m³/m³ (1000 SCF/B) to 1781 m³/m³ (10,000 scf/B), preferably 213 m³/m³ (1200 SCF/B) to 1068 m³/m³ (6000 SCF/B). The LHSV can be from about 0.2 h⁻¹ to about 10 h⁻¹, such as from about 0.5 h⁻¹ to about 5 h⁻¹ and/or from about 1 h⁻¹ to about 4 h⁻¹.

Before and/or after catalytic dewaxing, the hydroprocessed deasphalted oil (i.e., at least a lubricant boiling range portion thereof) can optionally be exposed to an aromatic saturation catalyst, which can alternatively be referred to as a hydrofinishing catalyst. Exposure to the aromatic saturation catalyst can occur either before or after fractionation. If aromatic saturation occurs after fractionation, the aromatic saturation can be performed on one or more portions of the fractionated product. Alternatively, the entire effluent from the last hydrocracking or dewaxing process can be hydrofinished and/or undergo aromatic saturation.

Hydrofinishing and/or aromatic saturation catalysts can include catalysts containing Group VI metals, Group VIII metals, and mixtures thereof. In an embodiment, preferred metals include at least one metal sulfide having a strong hydrogenation function. In another embodiment, the hydrofinishing catalyst can include a Group VIII noble metal, such as Pt, Pd, or a combination thereof. The mixture of metals may also be present as bulk metal catalysts wherein the amount of metal is about 30 wt. % or greater based on catalyst. For supported hydrotreating catalysts, suitable metal oxide supports include low acidic oxides such as silica, alumina, silica-aluminas or titania, preferably alumina. The preferred hydrofinishing catalysts for aromatic saturation will comprise at least one metal having relatively strong hydrogenation function on a porous support. Typical support materials include amorphous or crystalline oxide materials such as alumina, silica, and silica-alumina. The support materials may also be modified, such as by halogenation, or in particular fluorination. The metal content of the catalyst is often as high as about 20 weight percent for non-noble metals. In an embodiment, a preferred hydrofinishing catalyst can include a crystalline material belonging to the M41S class or family of catalysts. The M41S family of catalysts are mesoporous materials having high silica content. Examples include MCM-41, MCM-48 and MCM-50. A preferred member of this class is MCM-41.

Hydrofinishing conditions can include temperatures from about 125°C to about 425°C, preferably about 180°C to about 280°C, a hydrogen partial pressure from about 500 psig (3.4 MPa) to about 3000 psig (20.7 MPa), preferably about 1500 psig (10.3 MPa) to about 2500 psig (17.2 MPa), and liquid hourly space velocity from about 0.1 hr⁻¹ to about 5 hr⁻¹ LHSV, preferably about 0.5 hr⁻¹ to about 1.5 hr⁻¹. Additionally, a hydrogen treat gas rate of from 35.6 m³/m³ to 1781 m³/m³ (200 SCF/B to 10,000 SCF/B) can be used.

### Solvent Processing of Catalytically Dewaxed Effluent or Input Flow to Catalytic Dewaxing

For deasphalted oils derived from propane deasphalting, the further hydroprocessing (including catalytic dewaxing) can be sufficient to form lubricant base stocks with low haze formation and unexpected compositional properties. For deasphalted oils derived from C₄₊ deasphalting, after the further hydroprocessing (including catalytic dewaxing), the resulting catalytically dewaxed effluent can be solvent processed to form one or more lubricant base stock products with a reduced or eliminated tendency to form haze. The type of solvent processing can be dependent on the nature of the initial hydroprocessing (hydrotreatment and/or hydrocracking) and the nature of the further hydroprocessing (including dewaxing).

In aspects where the initial hydroprocessing is less severe, corresponding to 10 wt% to 40 wt% conversion relative to ∼700°F (370°C), the subsequent solvent processing can correspond to solvent dewaxing. The solvent dewaxing can be performed in a manner similar to the solvent dewaxing described above. However, this solvent dewaxing can be used to produce a Group II lubricant base stock. In some aspects, when the initial hydroprocessing corresponds to 10 wt% to 40 wt% conversion relative to 370°C, the catalytic dewaxing during further hydroprocessing can also be performed at lower severity, so that at least 6 wt% wax remains in the catalytically dewaxed effluent, or at least 8 wt%, or at least 10 wt%, or at least 12 wt%, or at least 15 wt%, such as up to 20 wt%. The solvent dewaxing can then be used to reduce the wax content in the catalytically dewaxed effluent by 2 wt% to 10 wt%. This can produce a solvent dewaxed oil product having a wax content of 0.1 wt% to 12 wt%, or 0.1 wt% to 10 wt%, or 0.1 wt% to 8 wt%, or 0.1 wt% to 6 wt%, or 1 wt% to 12 wt%, or 1 wt% to 10 wt%, or 1 wt% to 8 wt%, or 4 wt% to 12 wt%, or 4 wt% to 10 wt%, or 4 wt% to 8 wt%, or 6 wt% to 12 wt%, or 6 wt% to 10 wt%. In particular, the solvent dewaxed oil can have a wax content of 0.1 wt% to 12 wt%, or 0.1 wt% to 6 wt%, or 1 wt% to 10 wt%, or 4 wt% to 12 wt%.

In other aspects, the subsequent solvent processing can correspond to solvent extraction. Solvent extraction can be used to reduce the aromatics content and/or the amount of polar molecules. The solvent extraction process selectively dissolves aromatic components to form an aromatics-rich extract phase while leaving the more paraffinic components in an aromatics-poor raffinate phase. Naphthenes are distributed between the extract and raffinate phases. Typical solvents for solvent extraction include phenol, furfural and N-methyl pyrrolidone. By controlling the solvent to oil ratio, extraction temperature and method of contacting distillate to be extracted with solvent, one can control the degree of separation between the extract and raffinate phases. Any convenient type of liquid-liquid extractor can be used, such as a counter-current liquid-liquid extractor. Depending on the initial concentration of aromatics in the deasphalted oil, the raffinate phase can have an aromatics content of 5 wt% to 25 wt%. For typical feeds, the aromatics contents can be at least 10 wt%.

Optionally, the raffinate from the solvent extraction can be under-extracted. In such aspects, the extraction is carried out under conditions such that the raffinate yield is maximized while still removing most of the lowest quality molecules from the feed. Raffinate yield may be maximized by controlling extraction conditions, for example, by lowering the solvent to oil treat ratio and/or decreasing the extraction temperature. In various aspects, the raffinate yield from solvent extraction can be at least 40 wt%, or at least 50 wt%, or at least 60 wt%, or at least 70 wt%.

The solvent processed oil (solvent dewaxed or solvent extracted) can have a pour point of -6°C or les, or -10°C or less, or -15°C or less, or -20°C or less, depending on the nature of the target lubricant base stock product. Additionally or alternately, the solvent processed oil (solvent dewaxed or solvent extracted) can have a cloud point of -2°C or less, or -5°C or less, or - 10°C or less, depending on the nature of the target lubricant base stock product. Pour points and cloud points can be determined according to ASTM D97 and ASTM D2500, respectively. The resulting solvent processed oil can be suitable for use in forming one or more types of Group II base stocks. The resulting solvent dewaxed oil can have a viscosity index of at least 80, or at least 90, or at least 95, or at least 100, or at least 110, or at least 120. Viscosity index can be determined according to ASTM D2270. Preferably, at least 10 wt% of the resulting solvent processed oil (or at least 20 wt%, or at least 30 wt%) can correspond to a Group II bright stock having a kinematic viscosity at 100°C of at least 14 cSt, or at least 15 cSt, or at least 20 cSt, or at least 25 cSt, or at least 30 cSt, or at least 32 cSt, such as up to 50 cSt or more. Additionally or alternately, the Group II bright stock can have a kinematic viscosity at 40°C of at least 300 cSt, or at least 320 cSt, or at least 340 cSt, or at least 350 cSt, such as up to 500 cSt or more. Kinematic viscosity can be determined according to ASTM D445. Additionally or alternately, the Conradson Carbon residue content can be about 0.1 wt% or less, or about 0.02 wt% or less. Conradson Carbon residue content can be determined according to ASTM D4530. Additionally or alternately, the resulting base stock can have a turbidity of at least 1.5 (in combination with a cloud point of less than 0°C), or can have a turbidity of at least 2.0, and/or can have a turbidity of 4.0 or less, or 3.5 or less, or 3.0 or less. In particular, the turbidity can be 1.5 to 4.0, or 1.5 to 3.0, or 2.0 to 4.0, or 2.0 to 3.5.

The reduced or eliminated tendency to form haze for the lubricant base stocks formed from the solvent processed oil can be demonstrated by the reduced or minimized difference between the cloud point temperature and pour point temperature for the lubricant base stocks. In various aspects, the difference between the cloud point and pour point for the resulting solvent dewaxed oil and/or for one or more Group II lubricant base stocks, including one or more bright stocks, formed from the solvent processed oil, can be 22°C or less, or 20°C or less, or 15°C or less, or 10°C or less, such as down to about 1°C of difference.

In some alternative aspects, the above solvent processing can be performed prior to catalytic dewaxing.

### Group II Base Stock Products

For deasphalted oils derived from propane, butane, pentane, hexane and higher or mixtures thereof, the further hydroprocessing (including catalytic dewaxing) and potentially solvent processing can be sufficient to form lubricant base stocks with low haze formation (or no haze formation) and novel compositional properties. Traditional products manufactured today with kinematic viscosity of about 32 cSt at 100°C contain aromatics that are > 10% and/or sulfur that is > 0.03% of the base oil.

In various aspects, base stocks produced according to methods described herein can have a kinematic viscosity of at least 14 cSt, or at least 20 cSt, or at least 25 cSt, or at least 30 cSt, or at least 32 cSt at 100°C and can contain less than 10 wt% aromatics / greater than 90 wt% saturates and less than 0.03% sulfur. Optionally, the saturates content can be still higher, such as greater than 95 wt%, or greater than 97 wt%.

Base oils of the compositions described above have further been found to provide the advantage of being haze free upon initial production and remaining haze free for extended periods of time. This is an advantage over the prior art of high saturates heavy base stocks that was unexpected.

Additionally, it has been found that these base stocks can be blended with additives to form formulated lubricants, such as but not limited to marine oils, engine oils, greases, paper machine oils, and gear oils. These additives may include, but are not restricted to, detergents, dispersants, antioxidants, viscosity modifiers, and pour point depressants. More generally, a formulated lubricating including a base stock produced from a deasphalted oil may additionally contain one or more of the other commonly used lubricating oil performance additives including but not limited to antiwear agents, dispersants, other detergents, corrosion inhibitors, rust inhibitors, metal deactivators, extreme pressure additives, anti-seizure agents, wax modifiers, viscosity index improvers, viscosity modifiers, fluid-loss additives, seal compatibility agents, friction modifiers, lubricity agents, anti-staining agents, chromophoric agents, defoamants, demulsifiers, emulsifiers, densifiers, wetting agents, gelling agents, tackiness agents, colorants, and others. For a review of many commonly used additives, see Klamann in Lubricants and Related Products, Verlag Chemie, Deerfield Beach, FL; ISBN 0-89573-177-0. These additives are commonly delivered with varying amounts of diluent oil, that may range from 5 weight percent to 50 weight percent.

When so blended, the performance as measured by standard low temperature tests such as the Mini-Rotary Viscometer (MRV) and Brookfield test has been shown to be superior to formulations blended with traditional base oils.

It has also been found that the oxidation performance, when blended into industrial oils using common additives such as, but not restricted to, defoamants, pour point depressants, antioxidants, rust inhibitors, has exemplified superior oxidation performance in standard oxidation tests such as the US Steel Oxidation test compared to traditional base stocks.

Other performance parameters such as interfacial properties, deposit control, storage stability, and toxicity have also been examined and are similar to or better than traditional base oils.

In addition to being blended with additives, the base stocks described herein can also be blended with other base stocks to make a base oil. These other base stocks include solvent processed base stocks, hydroprocessed base stocks, synthetic base stocks, base stocks derived from Fisher-Tropsch processes, PAO, and naphthenic base stocks. Additionally or alternately, the other base stocks can include Group I base stocks, Group II base stocks, Group III base stocks, Group IV base stocks, and/or Group V base stocks. Additionally or alternately, still other types of base stocks for blending can include hydrocarbyl aromatics, alkylated aromatics, esters (including synthetic and/or renewable esters), and or other non-conventional or unconventional base stocks. These base oil blends of the obtained base stock and other base stocks can also be combined with additives, such as those mentioned above, to make formulated lubricants.

### Configuration Examples

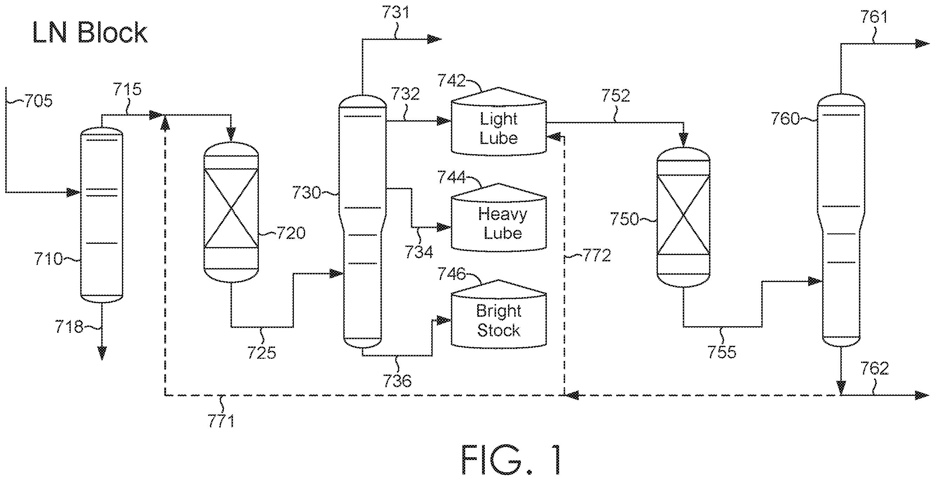

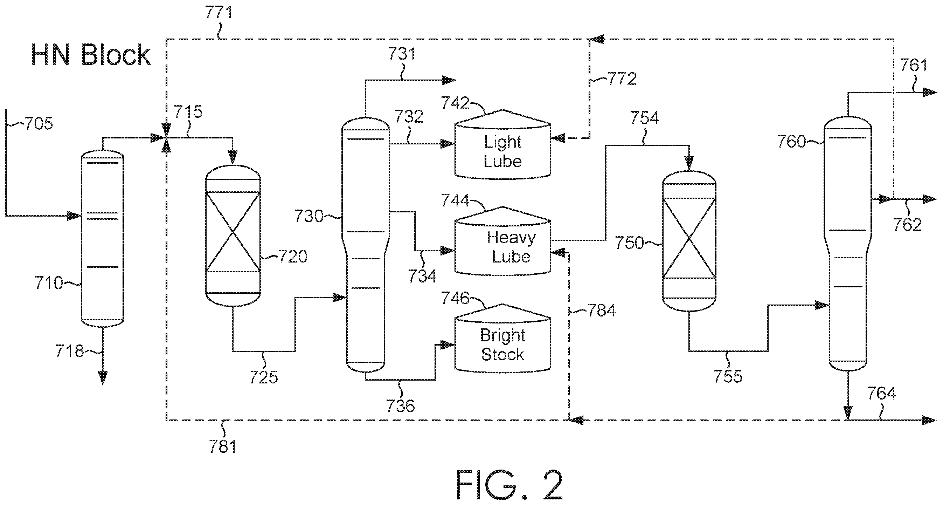

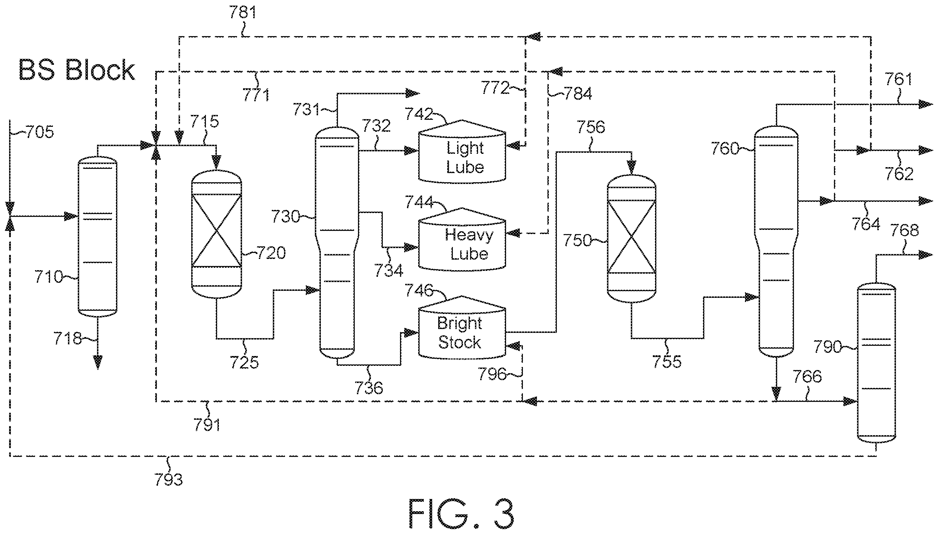

FIGS. 1 to 3 show examples of using blocked operation and/or partial product recycle during lubricant production based on a feed including deasphalted resid. In FIGS. 1 to 3, after initial sour stage processing, the hydroprocessed effluent is fractionated to form light neutral, heavy neutral, and brightstock portions. FIG. 1 shows an example of the process flow during processing to form light neutral base stock. FIG. 2 shows an example of the process flow during processing to form heavy neutral base stock. FIG. 3 shows an example of the process flow during processing to form brightstock.

In FIG. 1, a feed 705 is introduced into a deasphalter 710. The deasphalter 710 generates a deasphalted oil 715 and deasphalter rock or residue 718. The deasphalted oil 715 is then processed in a sour processing stage 720. Optionally, a portion 771 of recycled light neutral base product 762 can be combined with deasphalted oil 715. Sour processing stage 720 can include one or more of a deasphalting catalyst, a hydrotreating catalyst, a hydrocracking catalyst, and/or an aromatic saturation catalyst. The conditions in sour processing stage 720 can be selected to at least reduce the sulfur content of the hydroprocessed effluent 725 to 20 wppm or less. This can correspond to 15 wt% to 40 wt% conversion of the feed relative to 370°C. Optionally, the amount of conversion in the sour processing stage 720 can be any convenient higher amount so long as the combined conversion in sour processing stage 720 and sweet processing stage 750 is 90 wt% or less.

The hydroprocessed effluent 725 can then be passed into fractionation stage 730 for separation into a plurality of fractions. In the example shown in FIG. 1, the hydroprocessed effluent is separated into a light neutral portion 732, a heavy neutral portion 734, and a brightstock portion 736. To allow for blocked operation, the light neutral portion 732 can be sent to corresponding light neutral storage 742, the heavy neutral portion 734 can be sent to corresponding heavy neutral storage 744, and the brightstock portion 736 can be sent to corresponding brightstock storage 746. A lower boiling range fraction 731 corresponding to fuels and/or light ends can also be generated by fractionation stage 730. Optionally, fractionation stage can generate a plurality of lower boiling range fractions 731.

FIG. 1 shows an example of the processing system during a light neutral processing block. In FIG. 1, the feed 752 to sweet processing stage 750 corresponds to a feed derived from light neutral storage 742. The sweet processing stage 750 can include at least dewaxing catalyst, and optionally can further include one or more of hydrocracking catalyst and aromatics saturation catalyst. The dewaxed effluent 755 from sweet processing stage 750 can then be passed into a fractionator 760 to form light neutral base stock product 762. A lower boiling fraction 761 corresponding to fuels and/or light ends can also be separated out by fractionator 760. Optionally, a portion of light neutral base stock 762 can be recycled. The recycled portion of light neutral base stock 762 can be used as a recycled feed portion 771 and/or as a recycled portion 772 that is added to light neutral storage 742. Recycling a portion 771 for use as part of the feed can be beneficial for increasing the lifetime of the catalysts in sour processing stage 720. Recycling a portion 772 to light neutral storage 742 can be beneficial for increasing conversion and/or VI.

FIG. 2 shows the same processing configuration during processing of a heavy neutral block. In FIG. 2, the feed 754 to sweet processing stage 750 is derived from heavy neutral storage 744. The dewaxed effluent 755 from sweet processing stage 750 can be fractionated 760 to form lower boiling portion 761, heavy neutral base stock product 764, and light neutral base stock product 762. Because block operation to form a heavy neutral base stock results in production of both a light neutral product 762 and a heavy neutral product 764, various optional recycle streams can also be used. In the example shown in FIG. 2, optional recycle portions 771 and 772 can be used for recycle of the light neutral product 762. Additionally, optional recycle portions 781 and 784 can be used for recycle of the heavy neutral product 764. Recycle portions 781 and 784 can provide similar benefits to those for recycle portions 771 and/or 772.

FIG. 3 shows the same processing configuration during processing of a bright stock block. In FIG. 3, the feed 756 to sweet processing stage 750 is derived from bright stock storage 746. The dewaxed effluent 755 from sweet processing stage 750 can be fractionated 760 to form lower boiling portion 761, bottoms product 766, heavy neutral base stock product 764, and light neutral base stock product 762. Bottoms product 766 can then be extracted 790 to form a bright stock product 768. The aromatic extract 793 produced in extractor 790 can be recycled for use, for example, as part of the feed to deasphalter 710.

Because block operation to form a bright stock results in production of a bright stock product 768 as well as a light neutral product 762 and a heavy neutral product 764, various optional recycle streams can also be used. In the example shown in FIG. 3, optional recycle portions 771 and 772 can be used for recycle of the light neutral product 762, while optional recycle portions 781 and 784 can be used for recycle of the heavy neutral product 764. Additionally, optional recycle portions 791 and 796 can be used for recycle of the bottoms product 766. Recycle portions 791 and 796 can provide similar benefits to those for recycle portions 771, 772, 781, and/or 784.

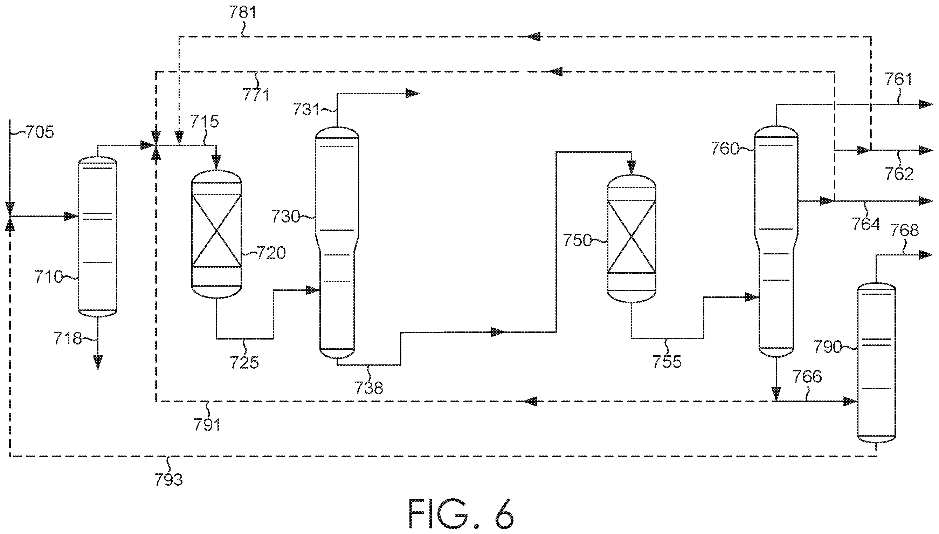

Recycle of a portion of the products can also be used in conjunction with wide cut processing of a larger portion of the lubricant boiling range feed to the second stage, such as processing substantially all of the feed to the second stage for lubricant production as a wide cut feed. FIG. 6 shows an example of a configuration for processing of a wide cut lubricant feed in the second (sweet) stage, with various optional recycle streams. The configuration is similar to the configuration shown in FIG. 3. However, instead of using a feed 756 derived from feed storage 746 for forming a brightstock, the configuration in FIG. 6 uses the bottoms 738 from fractionator 730 as the feed to the sweet stage 750.

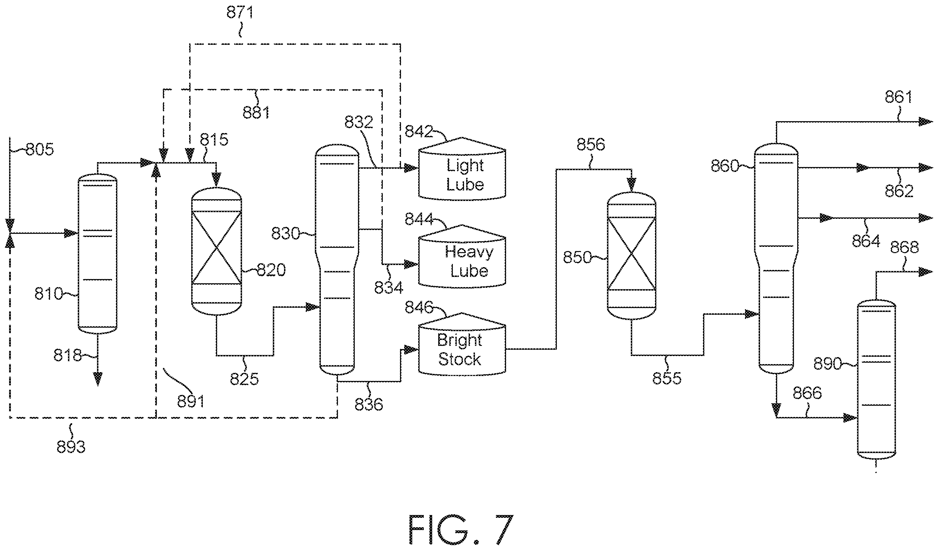

Recycle of intermediate products from the sour stage can also be beneficial in some circumstances. FIG. 7 shows an example of a configuration for block processing to form lubricant products where various recycle options are available within the sour processing stage. Of course, the recycle options shown in FIG. 7 can be used in conjunction with any of the configurations shown in FIGS. 3 to 6.

In FIG. 7, feed 805 is introduced into deasphalter 810. Optionally, a portion of recycled bottoms 893 from fractionator 830 can be included as part of feed 805. This can generate a deasphalter rock fraction 818 and a deasphalted oil 815. Deasphalted oil 815 can be passed into sour processing stage 820, which can include (for example) catalysts for demetallization, hydrotreating, and hydrocracking. Sour processing stage 820 can produce a sour stage effluent 825, which is passed into fractionator 830. Fractionator 830 can generate various feeds for production of lubricant boiling range products, such as a light neutral base stock feed 832 (for storage 842), a heavy neutral base stock feed 834 (for storage 844), and a brightstock feed 836 (for storage 846). Optionally, a portion of light neutral base stock feed 832 can be recycled 871 for combination with deasphalted oil 815. Additionally or alternately, a portion of heavy neutral base stock feed 834 can optionally be recycled 881 for combination with deasphalted oil 815. Additionally or alternately, a portion of brightstock feed 836 can optionally be recycled 891 for combination with deasphalted oil 815.

After the sour stage, the configuration in FIG. 7 can operate in a manner similar to the configurations shown in FIGS. 3 to 5. In FIG. 7, the block operation of the configuration is shown during a time period when brightstock is being produced. Thus, the feed 856 to the sweet processing stage 850 is derived from brightstock storage 846. The effluent 855 from sweet processing stage 850 can then be fractionated 860 to form, for example, light ends fraction 861, a light neutral base stock product 862, a heavy neutral base stock product 864, and a brightstock product 866. Optionally, the brightstock product 866 can be extracted 890 to form an extracted brightstock product 868.

### Example 1 - Viscosity and Viscosity Index relationships

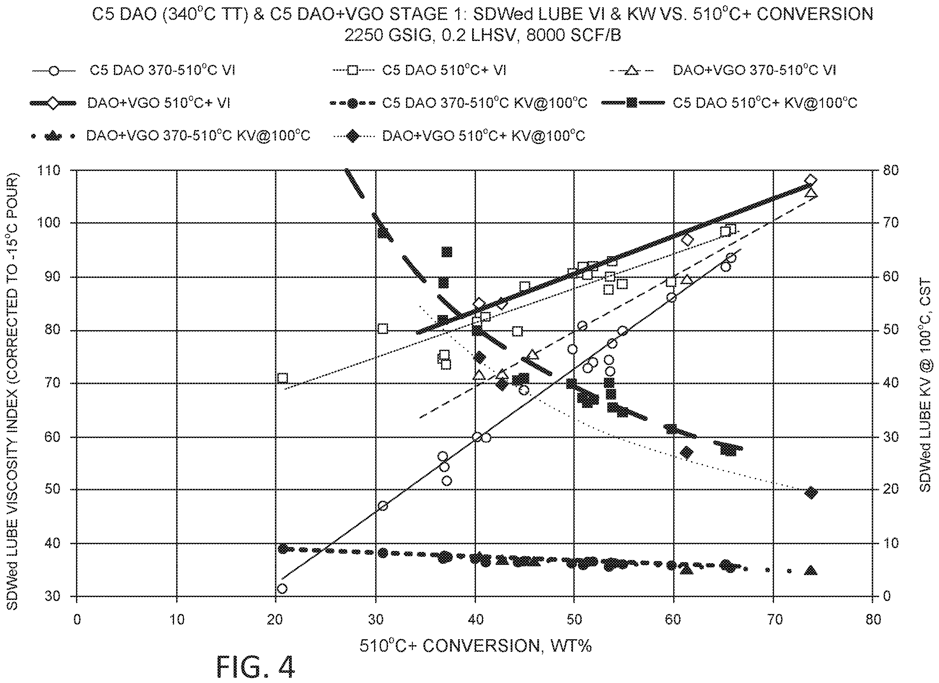

FIG. 4 shows an example of the relationship between processing severity, kinematic viscosity, and viscosity index for lubricant base stocks formed from a deasphalted oil. The data in FIG. 4 corresponds to lubricant base stocks formed from a pentane deasphalted oil at 75 wt% yield on resid feed. The deasphalted oil had a solvent dewaxed VI of 75.8 and a solvent dewaxed kinematic viscosity at 100°C of 333.65.

In FIG. 4, kinematic viscosities (right axis) and viscosity indexes (left axis) are shown as a function of hydroprocessing severity (510°C+ conversion) for a deasphalted oil processed in a configuration similar to FIG. 4. As shown in FIG. 4, increasing the hydroprocessing severity can provide VI uplift so that deasphalted oil can be converted (after solvent dewaxing) to lubricant base stocks. However, increasing severity also reduces the kinematic viscosity of the 510°C+ portion of the base stock, which can limit the yield of bright stock. The 370°C - 510°C portion of the solvent dewaxed product can be suitable for forming light neutral and/or heavy neutral base stocks, while the 510°C+ portion can be suitable for forming bright stocks and/or heavy neutral base stocks.

### Example 2 - Variations in Sweet and Sour Hydrocracking

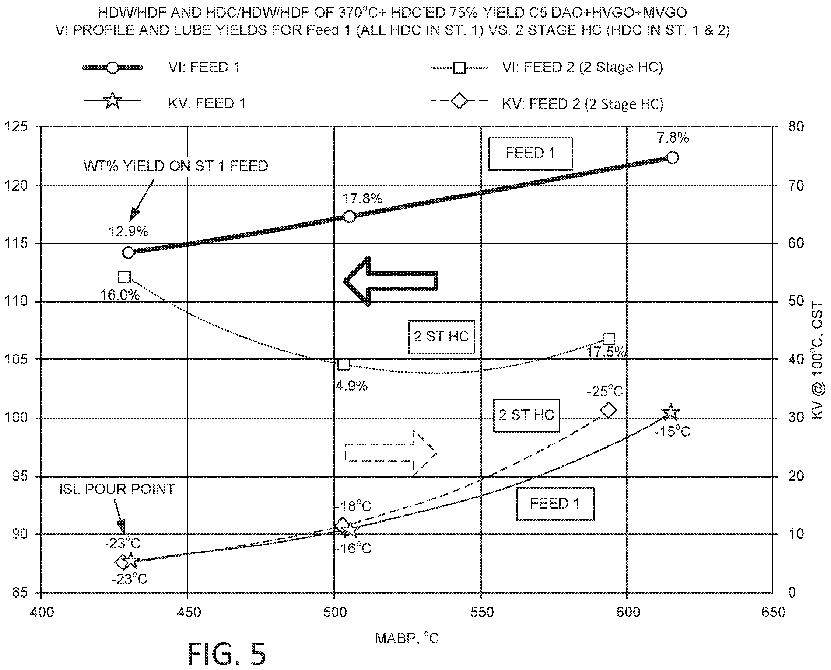

In addition to providing a method for forming Group II base stocks from a challenged feed, the methods described herein can also be used to control the distribution of base stocks formed from a feed by varying the amount of conversion performed in sour conditions versus sweet conditions. This is illustrated by the results shown in FIG. 5.

In FIG. 5, the upper two curves show the relationship between the cut point used for forming a lubricant base stock of a desired viscosity (bottom axis) and the viscosity index of the resulting base stock (left axis). The curve corresponding to the circle data points represents processing of a C₅ deasphalted oil using a configuration similar to FIG. 6, with all of the hydrocracking occurring in the sour stage. The curve corresponding to the square data points corresponds to performing roughly half of the hydrocracking conversion in the sour stage and the remaining hydrocracking conversion in the sweet stage (along with the catalytic dewaxing). The individual data points in each of the upper curves represent the yield of each of the different base stocks relative to the amount of feed introduced into the sour processing stage. It is noted that summing the data points within each curve shows the same total yield of base stock, which reflects the fact that the same total amount of hydrocracking conversion was performed in both types of processing runs. Only the location of the hydrocracking conversion (all sour, or split between sour and sweet) was varied.

The lower pair of curves provides additional information about the same pair of process runs. As for the upper pair of curves, the circle data points in the lower pair of curves represent all hydrocracking in the sour stage and the square data points correspond to a split of hydrocracking between sour and sweet stages. The lower pair of curves shows the relationship between cut point (bottom axis) and the resulting kinematic viscosity at 100°C (right axis). As shown by the lower pair of curves, the three cut point represent formation of a light neutral base stock (5 or 6 cSt), a heavy neutral base stock (10 - 12 cSt), and a bright stock (about 30 cSt). The individual data points for the lower curves also indicate the pour point of the resulting base stock.

As shown in FIG. 5, altering the conditions under which hydrocracking is performed can alter the nature of the resulting lubricant base stocks. Performing all of the hydrocracking conversion during the first (sour) hydroprocessing stage can result in higher viscosity index values for the heavy neutral base stock and bright stock products, while also producing an increased yield of heavy neutral base stock. Performing a portion of the hydrocracking under sweet conditions increased the yield of light neutral base stock and bright stock with a reduction in heavy neutral base stock yield. Performing a portion of the hydrocracking under sweet conditions also reduced the viscosity index values for the heavy neutral base stock and bright stock products. This demonstrates that the yield of base stocks and/or the resulting quality of base stocks can be altered by varying the amount of conversion performed under sour conditions versus sweet conditions.

### Example 3 - Feedstocks and DAOs

Table 1 shows properties of two types of vacuum resid feeds that are potentially suitable for deasphalting, referred to in this example as Resid A and Resid B. Both feeds have an API gravity of less than 6, a specific gravity of at least 1.0, elevated contents of sulfur, nitrogen, and metals, and elevated contents of carbon residue and n-heptane insolubles.

**Table 1 - Resid Feed Properties**

| Resid (566°C+) | Resid A | Resid B |
|---|---|---|
| API Gravity (degrees) | 5.4 | 4.4 |
| Specific Gravity (15°C) (g/cc) | 1.0336 | 1.0412 |
| Total Sulfur (wt%) | 4.56 | 5.03 |
| Nickel (wppm) | 43.7 | 48.7 |
| Vanadium (wppm) | 114 | 119 |
| TAN (mg KOH/g) | 0.314 | 0.174 |
| Total Nitrogen (wppm) | 4760 | 4370 |
| Basic Nitrogen (wppm) | 1210 | 1370 |
| Carbon Residue (wt%) | 24.4 | 25.8 |
| n-heptane insolubles (wt%) | 7.68 | 8.83 |
| Wax (Total - DSC) (wt%) | 1.4 | 1.32 |
| KV @ 100°C (cSt) | 5920 | 11200 |
| KV @ 135°C (cSt) | 619 | 988 |

The resids shown in Table 1 were used to form deasphalted oil. Resid A was exposed to propane deasphalting (deasphalted oil yield < 40%) and pentane deasphalting conditions (deasphalted oil yield ∼ 65%). Resid B was exposed to butane deasphalting conditions (deasphalted oil yield ∼ 75%). Table 2 shows properties of the resulting deasphalted oils.

**Table 2 - Examples of Deasphalted Oils**

| | C₃ DAO | C₄ DAO | C₅ DAO |
|---|---|---|---|
| API Gravity (degrees) | 22.4 | 12.9 | 12.6 |
| Specific Gravity (15°C) (g/cc) | 0.9138 | 0.9782 | 0.9808 |
| Total Sulfur (wt%) | 2.01 | 3.82 | 3.56 |
| Nickel (wppm) | < 0.1 | 5.2 | 5.3 |
| Vanadium (wppm) | < 0.1 | 15.6 | 17.4 |
| Total Nitrogen (wppm) | 504 | 2116 | 1933 |
| Basic Nitrogen (wppm) | 203 | <N/A> | 478 |
| Carbon Residue (wt%) | 1.6 | 8.3 | 11.0 |
| KV @ 100°C (cSt) | 33.3 | 124 | 172 |
| VI | 96 | 61 | <N/A> |
| SimDist (ASTM D2887) °C | | | |
| 5 wt% | 509 | 490 | 527 |
| 10 wt% | 528 | 515 | 546 |
| 30 wt% | 566 | 568 | 588 |
| 50 wt% | 593 | 608 | 619 |
| 70 wt% | 623 | 657 | 664 |
| 90 wt% | 675 | <N/A> | <N/A> |
| 95 wt% | 701 | <N/A> | <N/A> |

As shown in Table 2, the higher severity deasphalting provided by propane deasphalting results in a different quality of deasphalted oil than the lower severity C₄ and C₅ deasphalting that was used in this example. It is noted that the C₃ DAO has a kinematic viscosity @100°C of less than 35, while the C₄ DAO and C₅ DAO have kinematic viscosities greater than 100. The C₃ DAO also generally has properties more similar to a lubricant base stock product, such as a higher API gravity, a lower metals content / sulfur content / nitrogen content, lower CCR levels, and/or a higher viscosity index.

### Example 4 - Sour Stage Processing Using Bulk Metal Catalyst

One of the difficulties with processing of feeds based on deasphalted oils for forming lubricant base stocks is that the feeds have an increased susceptibility to forming polynuclear aromatics (PNAs) during processing. The tendency to form PNAs can increase with the length of exposure to sufficiently severe hydroprocessing conditions. As a result, during sour stage processing for removal of contaminants and/or viscosity index uplift, it can be beneficial to use higher activity catalysts so that the space velocity in the sour stage can be increased while still achieving desired properties for the sour stage effluent.

The impact of using a bulk metal catalyst as part of sour stage hydroprocessing of a feed was investigated by processing a feed in a laboratory scale two reactor configuration. The first reactor included the two commercially available demetallization / hydrotreating catalyst beds described in Example 13. In various processing runs, the second reactor included three different combinations of hydrotreating catalyst. One option for the second reactor catalyst was to use a commercially available hydrotreating catalyst. In a second option, the commercially available hydrotreating catalyst was used in conjunction with a first bulk multimetallic catalyst formed from reactants at least partially in the solid state, as described above. In a third option, the commercially available hydrotreating catalyst was used in conjunction with a second bulk multimetallic catalyst formed from a precursor including organic components, as described above.

Table 3 shows the feed used for the first reactor, and the resulting first reactor product that was used as a feed for the second reactor. It is believed that the feed to the first reactor and the feed to the second reactor is representative of the feeds / inputs that would be used during formation of a lubricant base stock from high lift deasphalted oil. During such production, a sour hydrocracking reactor would be used to further process the output generated from the second reactor. The raw DAO shown in Table 3 corresponds to a deasphalted oil formed by C₅ deasphalting.

**Table 3 - Feed to First and Second Reactors of Sour Processing Stage**

| | Raw DAO | Prepared feed to second stage HDT (Optionally including bulk metal catalyst) |
|---|---|---|
| Specific gravity at 15°C (g/cm³) | 0.9839 | 0.9212 |
| H, wt% | 10.76 | 12.73 |
| S, wppm | 34600 | 726 |
| N, wppm | 2562 | 113 |
| Conradson Carbon Residue, wt% | 12.1 | 1.22 |

After processing the raw DAO from Table 3 in the first reactor to form the feed for hydrotreatment in the second reactor, the feed to the second reactor was processed in the presence of one of the three catalyst options. The processing conditions included a pressure of 2200 psig (∼15.2 MPag) and a hydrogen treat gas rate of 8000 SCF/b (-1400 Nm³/m³). The temperature and LHSV were varied to provide processing conditions 1 - 3 shown in Table 4.

**Table 4 - Second Reactor Processing Conditions and Product Properties**

| | | | | |
|---|---|---|---|---|
| Condition | | 1 | 2 | 3 |
| Pressure | psig | 2200 | 2200 | 2200 |
| TGR | scf/bbl | 8000 | 8000 | 8000 |
| Gas Flow | sccm | 128.2 | 128.2 | 128.2 |
| Liq Flow | cc/hr | 5.4 | 5.4 | 5.4 |
| Temp | C | 343 | 356 | 371 |
| Temp | F | 649.4 | 672.8 | 699.8 |
| 3 cc supported | | | | |
| Sulfur | ppm | 400 | 287 | 144 |
| Nitrogen | ppm | 78.2 | 60 | 34.1 |
| Density | g/ml | 0.8799 | 0.8803 | 0.8765 |
| 3 cc supported / 2 cc bulk cat 1 | | | | |
| Sulfur | ppm | 232 | 133 | 45.3 |
| Nitrogen | ppm | 56 | 38 | 15 |
| Density | g/ml | 0.8787 | 0.8762 | 0.8701 |
| 3 cc supported / 2 cc bulk cat 2 | | | | |
| Sulfur | ppm | 157 | 76 | 22 |
| Nitrogen | ppm | 43 | 24 | 7 |
| Density | g/ml | 0.8760 | 0.8735 | 0.8647 |

As shown in Table 4, the configurations including both the commercial supported catalyst and a bulk catalyst included more total catalyst volume than the configuration using just the commercially available supported catalyst. As a result, the space velocities are different. As shown in Table 4, both bulk catalysts provided improved activity relative to using a commercially available supported catalyst. Although the space velocities are different in the examples including both bulk and supported catalyst versus supported catalyst alone, those of skill in the art will recognize that based on a first order model, it is clear that the bulk catalysts provide superior activity for sulfur removal. Additionally, use of bulk catalyst 2 (formed from a precursor including an organic component) provides a significant activity advantage over use of bulk catalyst 1.

### Example 5 - Production of Base Stocks (Including Brightstock) at High Conversion

Another series of processing runs were performed using a C₅ DAO (75 wt% yield) as a feed for lubricant production. The configuration was similar to FIG. 13. Block processing was used for the sweet processing stage. The light neutral, heavy neutral, and brightstock portions were processed under conditions to produce two levels of conversion relative to 370°C. In a first set of runs, the combined sour stage and sweet stage conversion was 60 wt%. In a second set of runs, the combined sour stage and sweet stage conversion was 82 wt%. It is noted that at high rates of conversion during a single pass, any portions of a lubricant product that are recycled could potentially undergo conversion amounts of greater than 70 wt%, or greater than 75 wt%, or greater than 80 wt%, such as up to 90 wt% or more.

Conventionally, conversion of greater than roughly 70 wt% of a feedstock during lubricant product is believed to lead to large reductions in viscosity index for resulting lubricant products. Without being bound by any particular theory, this is believed to be due in part to conversion of isoparaffins with the feed at elevated levels of conversion. It has been surpisingly discovered that feeds derived from high yield deasphalted oils (such as deasphalting yields of at least 50 wt%) can be undergo greater than 70 wt% conversion without having substantial reductions in VI. This is believed to be related to the unusually high aromatic content of lubricant feeds derived from high yield deasphalted oils.

Table 5 shows results from processing the C₅ DAO feed in this example at conversion amounts of 60 wt% and 82 wt% (combined conversion across initial sour stage and second sweet stage) for production during block operation of a light neutral product, a heavy neutral product, and a brightsock product. As shown in Table 5, increasing the combined conversion results in products with comparable (or potentially higher) viscosity index values, while also generating products with substantially reduced pour point values.

**Table 5 - Product properties at varying conversion**

| | 82 wt% combined conversion (relative to 370°C) | 60 wt% combined conversion (relative to 370°C) |
|---|---|---|
| Light Neutral | | |
| VI | 106 | 106 |
| Pour Point (°C) | -64 | -34 |
| KV @ 100°C (cSt) | 4.9 | 4.3 |
| Heavy Neutral | | |
| VI | 100.9 | 100.5 |
| Pour Point (°C) | -48 | -34 |
| KV @ 100°C (cSt) | 11.9 | 12.6 |
| Brightstock | | |
| VI | 109 | 106.3 |
| Pour Point (°C) | -32 | -20 |
| KV @ 100°C (cSt) | 34.6 | 43.2 |

## Claims

1. A method for making lubricant base stock, comprising:
making a mixed metal catalyst precursor composition by:
heating a composition comprising at least one metal from Group 6 of the Periodic Table of the Elements, at least one metal from Groups 8-10 of the Periodic Table of the Elements, and a reaction product formed from (i) a first organic compound containing at least one amine group, and (ii) a second organic compound separate from said first organic compound and containing at least one carboxylic acid group to a temperature from about 195°C to about 260°C for a time sufficient for the first and second organic compounds to form a reaction product in situ that contains an amide moiety, unsaturated carbon atoms not present in the first or second organic compounds, oxygen atoms not present in the first or second organic compounds, or a combination thereof;
sulfiding the mixed metal catalyst precursor composition to form a sulfided mixed metal catalyst;
forming a mixed metal catalyst composition comprising the sulfided mixed metal catalyst;
performing solvent deasphalting, optionally using a C₄₊ solvent, under effective solvent deasphalting conditions on a feedstock having a T5 boiling point of at least about 370°C, the effective solvent deasphalting conditions producing a yield of deasphalted oil of at least about 50 wt% of the feedstock;
hydroprocessing at least a portion of the deasphalted oil under first effective hydroprocessing conditions to form a hydroprocessed effluent, the hydroprocessing comprising exposing the at least a portion of the deasphalted oil to the mixed metal catalyst composition under the hydroprocessing conditions, the at least a portion of the deasphalted oil having an aromatics content of at least about 50 wt%, the hydroprocessed effluent comprising a sulfur content of 300 wppm or less, a nitrogen content of 100 wppm or less, or a combination thereof;
separating the hydroprocessed effluent to form at least a fuels boiling range fraction, a first fraction having a T₅ distillation point of at least 370°C, and a second fraction having a T₅ distillation point of at least 370°C, the second fraction having a higher kinematic viscosity at 100°C than the first fraction;
hydroprocessing at least a portion of the first fraction under second effective hydroprocessing conditions, the second effective hydroprocessing conditions comprising catalytic dewaxing conditions, to form a first catalytically dewaxed effluent comprising a 370°C+ portion having a first kinematic viscosity at 100°C; and
hydroprocessing at least a portion of the second fraction under third effective hydroprocessing conditions, the third effective hydroprocessing conditions comprising catalytic dewaxing conditions, to form a second catalytically dewaxed effluent comprising a 370°C+ portion having a second kinematic viscosity at 100°C that is greater than the first kinematic viscosity at 100°C,
wherein the second effective hydroprocessing conditions are different from the third effective hydroprocessing conditions.

2. The method of claim 1, wherein the catalyst precursor composition is treated first with said first organic compound and second with said second organic compound, or wherein the catalyst precursor composition is treated first with said second organic compound and second with said first organic compound, or wherein the catalyst precursor composition is treated simultaneously with said first organic compound and with said second organic compound.

3. The method of claim 1 or 2, wherein said at least one metal from Group 6 is Mo, W, or a combination thereof, and wherein said at least one metal from Groups 8-10 is Co, Ni, or a combination thereof.

4. The process of any of claims 1 to 3, wherein the mixed metal catalyst precursor composition is a bulk metal hydroprocessing catalyst precursor composition consisting essentially of the reaction product, an oxide form of the at least one metal from Group 6, an oxide form of the at least one metal from Groups 8-10, and optionally about 20 wt % or less of a binder.

5. The method of any of the above claims, further comprising at least one of:
a) solvent extracting at least a portion of the second catalytically dewaxed effluent to form a solvent processed effluent, or
b) solvent dewaxing at least a portion of the second catalytically dewaxed effluent to form a solvent processed effluent,
wherein the solvent processed effluent comprises a T5 distillation point of at least 482°C, a VI of at least 80, a pour point of -6°C or less, and a cloud point of -2°C or less.

6. The method of any of the above claims, wherein the process further comprises recycling at least a portion of a) the third fraction, b) the fourth fraction, c) the first catalytically dewaxed effluent, d) the first fraction, e) the second fraction, or f) a combination of a plurality of a) - e), as part of i) the at least a portion of the deasphalted oil, ii) the at least a portion of the first fraction, iii) the at least a portion of the second fraction, or iv) a combination of a plurality of i), ii), and iii).

7. The method of any of the above claims, wherein the yield of deasphalted oil is at least 55 wt%; or wherein the deasphalted oil has an aromatics content of at least 55 wt% based on a weight of the deasphalted oil; or a combination thereof.

8. The method of any of the above claims, wherein a combined conversion of the feedstock across the first effective hydroprocessing conditions and the second effective hydroprocessing conditions is at least 70 wt% relative to 370°C, the second catalytically dewaxed effluent having a viscosity index of at least 90; or wherein a combined conversion of the feedstock across the first effective hydroprocessing conditions and the third effective hydroprocessing conditions is at least 70 wt% relative to 370°C, the third catalytically dewaxed effluent and/or the fourth fraction having a viscosity index of at least 90; or a combination thereof.

9. The method of any of the above claims, wherein separating the hydroprocessed effluent further comprises forming an additional fraction having a T₅ distillation point of at least 370°C, the method further comprising:
hydroprocessing at least a portion of the additional fraction under third effective hydroprocessing conditions, the third effective hydroprocessing conditions comprising catalytic dewaxing conditions, to form a third catalytically dewaxed effluent comprising a 370°C+ portion having a kinematic viscosity at 100°C of 3.5 cSt or more.

10. The method of any of the above claims, wherein at least a portion of the first fraction, at least a portion of the second fraction, at least a portion of the first catalytically dewaxed effluent, at least a portion of the second catalytically dewaxed effluent, or a combination thereof is used as a feed for a steam cracker; or wherein at least a portion of the second catalytically dewaxed effluent is used as an asphalt blend component.

11. Use of a mixed metal catalyst composition for making lubricant base stock by:
heating a composition comprising at least one metal from Group 6 of the Periodic Table of the Elements, at least one metal from Groups 8-10 of the Periodic Table of the Elements, and a reaction product formed from (i) a first organic compound containing at least one amine group, and (ii) a second organic compound separate from said first organic compound and containing at least one carboxylic acid group to a temperature from about 195°C to about 260°C for a time sufficient for the first and second organic compounds to form a reaction product in situ that contains an amide moiety, unsaturated carbon atoms not present in the first or second organic compounds, oxygen atoms not present in the first or second organic compounds, or a combination thereof;
sulfiding the mixed metal catalyst precursor composition to form a sulfide mixed metal catalyst; and
forming a mixed metal catalyst composition comprising the sulfided mixed metal catalyst;
performing solvent deasphalting, optionally using a C₄₊ solvent, under effective solvent deasphalting conditions on a feedstock having a T5 boiling point of at least about 370°C, the effective solvent deasphalting conditions producing a yield of deasphalted oil of at least about 50 wt% of the feedstock;
and wherein the use comprises using the mixed metal catalyst for the hydroprocessing of the deasphalted oil.

## Patentansprüche

1. Verfahren zur Herstellung von Schmierbasismaterial, bei dem eine Mischmetallkatalysatorvorläuferzusammensetzung gefertigt wird, indem
eine Zusammensetzung, die mindestens ein Metall der Gruppe 6 des Periodensystems der Elemente, mindestens ein Metall der Gruppen 8 bis 10 des Periodensystems der Elemente, und ein Reaktionsprodukt umfasst, das aus (i) einer ersten organischen Verbindung, die mindestens eine Amingruppe enthält, und (ii) einer zweiten Verbindung gebildet wurde, die getrennt von der ersten organischen Verbindung vorliegt und mindestens eine Carbonsäuregruppe enthält, für eine ausreichende Zeit, damit die erste und die zweite organische Verbindung in situ ein Reaktionsprodukt bilden, das einen Amidanteil enthält, wobei in der ersten oder zweiten organischen Verbindung keine ungesättigten Kohlenstoffatome vorhanden sind, in der ersten oder zweiten organischen Verbindung keine Sauerstoffatome vorhanden sind, oder eine Kombination davon, auf eine Temperatur von etwa 195°C bis etwa 260°C erwärmt wird,
die Mischmetallkatalysatorvorläuferzusammensetzung sulfidiert wird, um sulfidierten Mischmetallkatalysator zu bilden,
Mischmetallkatalysatorzusammensetzung gebildet wird, die den sulfidierten Mischmetallkatalysator umfasst, Lösungsmittelentasphaltierung, gegebenenfalls unter Verwendung von C₄₊-Lösungsmittel, unter effektiven Lösungsmittelentasphaltierungsbedingungen an Einsatzmaterial mit einem T5-Siedepunkt von mindestens etwa 370°C durchgeführt wird, wobei die effektiven Lösungsmittelentasphaltierungsbedingungen eine Ausbeute an entasphaltiertem Öl von mindestens etwa 50 Gew.% des Einsatzmaterials produzieren, mindestens ein Anteil des entasphaltierten Öls unter ersten effektiven Wasserstoffbehandlungsbedingungen einer Wasserstoffbehandlung unterzogen wird, um einen einer Wasserstoffbehandlung unterzogenen Ausfluss zu bilden, wobei die Wasserstoffbehandlung umfasst, dass mindestens ein Anteil des entasphaltierten Öls der Mischmetallkatalysatorzusammensetzung unter den Wasserstoffbehandlungsbedingungen ausgesetzt wird, wobei der mindestens eine Anteil des entasphaltierten Öls einen Aromatengehalt von mindestens etwa 50 Gew.% aufweist, wobei der der Wasserstoffbehandlung unterzogene Ausfluss einen Schwefelgehalt von 300 Gew.ppm oder weniger, einen Stickstoffgehalt von 100 Gew.% oder weniger oder eine Kombination davon umfasst,
der der Wasserstoffbehandlung unterzogene Ausfluss getrennt wird, um mindestens eine im Brennstoffbereich siedende Fraktion, eine erste Fraktion mit einem T5-Destillationspunkt von mindestens 370°C und eine zweite Fraktion mit einem T5-Destillationspunkt von mindestens 370°C zu bilden, wobei die zweite Fraktion eine höhere kinematische Viskosität bei 100°C als die erste Fraktion hat,
mindestens ein Anteil der ersten Fraktion unter zweiten effektiven Wasserstoffbehandlungsbedingungen einer Wasserstoffbehandlung unterzogen wird, wobei die zweiten effektiven Wasserstoffbehandlungsbedingungen katalytische Entparaffinierungsbedingungen umfassen, um einen ersten katalytisch entparaffinierten Ausfluss zu bilden, der einen 370°C+-Anteil mit einer ersten kinematischen Viskosität bei 100°C umfasst, und
mindestens ein Anteil der zweiten Fraktion unter dritten effektiven Wasserstoffbehandlungsbedingungen einer Wasserstoffbehandlung unterzogen wird, wobei die dritten effektiven Wasserstoffbehandlungsbedingungen katalytische Entparaffinierungsbedingungen umfassen, um einen zweiten katalytisch entparaffinierten Ausfluss zu bilden, der einen 370°C+-Anteil mit einer zweiten kinematischen Viskosität bei 100°C umfasst, die größer als die erste kinematische Viskosität bei 100°C ist,
wobei die zweiten effektiven Wasserstoffbehandlungsbedingungen sich von den dritten effektiven Wasserstoffbehandlungsbedingungen unterscheiden.

2. Verfahren nach Anspruch 1, bei dem die Katalysatorvorläuferzusammensetzung zuerst mit der ersten organischen Verbindung und als zweites mit der zweiten organischen Verbindung behandelt wird, oder bei dem die Katalysatorvorläuferzusammensetzung zuerst mit der zweiten organischen Verbindung und als zweites mit der ersten organischen Verbindung behandelt wird, oder bei dem die Katalysatorvorläuferzusammensetzung gleichzeitig mit der ersten organischen Verbindung und mit der zweiten organischen Verbindung behandelt wird.

3. Verfahren nach Anspruch 1 oder 2, bei dem mindestens ein Metall aus der Gruppe 6 Mo, W oder eine Kombination davon ist, und bei dem mindestens ein Metall aus den Gruppen 8 bis 10 Co, Ni oder eine Kombination davon ist.

4. Verfahren nach einem der Ansprüche 1 bis 3, bei dem die Mischmetallkatalysatorvorläuferzusammensetzung eine Massenmetall-Wasserstoffbehandlungs-Katalysatorvorläuferzusammensetzung ist, die im Wesentlichen aus dem Reaktionsprodukt, einer Oxidform des mindestens einen Metalls der Gruppe 6, einer Oxidform des mindestens einen Metalls der Gruppen 8 bis 10 und gegebenenfalls etwa 20 Gew.% oder weniger Bindemittel besteht.

5. Verfahren nach einem der vorhergehenden Ansprüche, das des Weiteren mindestens eines von
a) Lösungsmittelextraktion von mindestens einem Anteil des zweiten katalytisch entparaffinierten Ausflusses, um lösungsmittelverarbeiteten Ausfluss zu bilden, oder
b) Lösungsmittelentparaffinierung von mindestens einem Anteil des zweiten katalytisch entparaffinierten Ausflusses umfasst, um lösungsmittelverarbeiteten Ausfluss zu bilden,
wobei der lösungsmittelverarbeitete Ausfluss einen T5-Destillationspunkt von mindestens 482°C, einen VI von mindestens 80, einen Stockpunkt von -6°C oder weniger und einen Trübungspunkt von -2°C oder weniger umfasst.

6. Verfahren nach einem der vorhergehenden Ansprüche, das des Weiteren Rückführen von mindestens einem Anteil von a) der dritten Fraktion, b) der vierten Fraktion, c) dem ersten katalytisch entparaffinierten Ausfluss, d) der ersten Fraktion, e) der zweiten Fraktion oder f) einer Kombination einer Vielzahl von a) bis e) als Teil von i) dem mindestens einen Anteil des entasphaltierten Öls, ii) dem mindestens einen Anteil der ersten Fraktion, iii) dem mindestens einen Anteil der zweiten Fraktion oder iv) einer Kombination einer Vielzahl von i), ii) und iii) umfasst.

7. Verfahren nach einem der vorhergehenden Ansprüche, bei dem die Ausbeute des entasphaltierten Öls mindestens 55 Gew.% beträgt, oder bei dem das entasphaltierte Öl einen Aromatengehalt von mindestens 55 Gew.% aufweist, bezogen auf ein Gewicht des entasphaltierten Öls, oder eine Kombination davon.

8. Verfahren nach einem der vorhergehenden Ansprüche, bei dem eine kombinierte Umwandlung des Einsatzmaterials über die ersten effektiven Wasserstoffbehandlungsbedingungen und die zweiten effektiven Wasserstoffbehandlungsbedingungen mindestens 70 Gew.% beträgt, relativ zu 370°C, der zweite katalytisch entparaffinierte Ausfluss einen Viskositätsindex von mindestens 90 aufweist, oder bei dem eine kombinierte Umwandlung des Einsatzmaterials über die ersten effektiven Wasserstoffbehandlungsbedingungen und die dritten effektiven Wasserstoffbehandlungsbedingungen mindestens 70 Gew.% beträgt, relativ zu 370°C, der dritte katalytisch entparaffinierte Ausfluss und/oder die vierte Fraktion einen Viskositätsindex von mindestens 90 aufweist bzw. aufweisen, oder eine Kombination davon.

9. Verfahren nach einem der vorhergehenden Ansprüche, bei dem Trennen des einer Wasserstoffbehandlung unterzogenen Ausflusses des Weiteren Bilden einer zusätzlichen Fraktion mit einem T5-Destillationspunkt von mindestens 370°C umfasst, und in dem Verfahren des Weiteren:
mindestens ein Anteil der zusätzlichen Fraktion unter dritten effektiven Wasserstoffbehandlungsbedingungen einer Wasserstoffbehandlung unterzogen wird, wobei die dritten effektiven Wasserstoffbehandlungsbedingungen katalytische Entparaffinierungsbedingungen umfassen, um einen dritten katalytisch entparaffinierten Ausfluss zu bilden, der einen 370°C+-Anteil mit einer kinematischen Viskosität bei 100°C von 3,5 cSt oder mehr umfasst.

10. Verfahren nach einem der vorhergehenden Ansprüche, bei dem mindestens ein Anteil der ersten Fraktion, mindestens ein Anteil der zweiten Fraktion, mindestens ein Anteil des ersten katalytisch entparaffinierten Ausflusses, mindestens ein Anteil des zweiten katalytisch entparaffinierten Ausflusses oder eine Kombination davon als Einsatzmaterial für einen Dampfcracker verwendet wird, oder wobei mindestens ein Anteil des zweiten katalytisch entparaffinierten Ausflusses als Asphaltgemischkomponente verwendet wird.

11. Verwendung einer Mischmetallkatalysatorzusammensetzung zum Herstellen von Schmierbasisöl, indem
eine Zusammensetzung, die mindestens ein Metall der Gruppe 6 des Periodensystems der Elemente, mindestens ein Metall der Gruppen 8 bis 10 des Periodensystems der Elemente, und ein Reaktionsprodukt umfasst, das aus (i) einer ersten organischen Verbindung, die mindestens eine Amingruppe enthält, und (ii) einer zweiten Verbindung gebildet wurde, die getrennt von der ersten organischen Verbindung vorliegt und mindestens eine Carbonsäuregruppe enthält, für eine ausreichende Zeit, damit die erste und die zweite organische Verbindung in situ ein Reaktionsprodukt bilden, das einen Amidanteil enthält, wobei in der ersten oder zweiten organischen Verbindung keine ungesättigten Kohlenstoffatome vorhanden sind, in der ersten oder zweiten organischen Verbindung keine Sauerstoffatome vorhanden sind, oder eine Kombination davon, auf eine Temperatur von etwa 195°C bis etwa 260°C erwärmt wird,
die Mischmetallkatalysatorvorläuferzusammensetzung sulfidiert wird, um sulfidierten Mischmetallkatalysator zu bilden, und
Mischmetallkatalysatorzusammensetzung gebildet wird, welche den sulfidierten Mischmetallkatalysator umfasst, Lösungsmittelentasphaltierung, gegebenenfalls unter Verwendung von C₄+-Lösungsmittel, unter effektiven Lösungsmittelentasphaltierungsbedingungen an Einsatzmaterial mit einem T5-Siedepunkt von mindestens etwa 370°C durchgeführt wird, wobei die effektiven Lösungsmittelentasphaltierungsbedingungen eine Ausbeute an entasphaltiertem Öl von mindestens etwa 50 Gew.% des Einsatzmaterials produzieren, und wobei die Verwendung das Verwenden des Mischmetallkatalysators zur Wasserstoffbehandlung des entasphaltierten Öls umfasst.

## Revendications

1. Procédé pour la préparation d'une huile de base lubrifiante, comprenant :
la préparation d'une composition de précurseur de catalyseur métallique mixte par :
chauffage d'une composition comprenant au moins un métal du groupe 6 du tableau périodique des éléments, au moins un métal des groupes 8 à 10 du tableau périodique des éléments, et un produit de réaction formé à partir de (i) un premier composé organique contenant au moins un groupe amine, et (ii) un deuxième composé organique distinct dudit premier composé organique et contenant au moins un groupe acide carboxylique à une température d'environ 195 °C à environ 260 °C pendant un temps suffisant pour que les premier et deuxième composés organiques forment un produit de réaction *in situ* qui contient un groupement amide, des atomes de carbone insaturés n'étant pas présents dans les premier ou deuxième composés organiques, des atomes d'oxygène n'étant pas présents dans les premier ou deuxième composés organiques, ou une combinaison correspondante ;
sulfuration de la composition de précurseur de catalyseur métallique mixte pour former un catalyseur métallique mixte sulfuré ;
formation d'une composition de catalyseur métallique mixte comprenant le catalyseur métallique mixte sulfuré ;
réalisation d'un désasphaltage au solvant, éventuellement à l'aide d'un solvant C₄₊, dans des conditions efficaces de désasphaltage au solvant sur une matière première possédant un point d'ébullition T5 d'au moins environ 370 °C, les conditions efficaces de désasphaltage au solvant produisant un rendement d'huile désasphaltée d'au moins environ 50 % en poids de la matière première ;
hydrotraitement d'au moins une partie de l'huile désasphaltée dans des premières conditions efficaces d'hydrotraitement pour former un effluent hydrotraité, l'hydrotraitement comprenant l'exposition de l'au moins une partie de l'huile désasphaltée à la composition de catalyseur métallique mixte dans les conditions d'hydrotraitement, l'au moins une partie de l'huile désasphaltée possédant une teneur en composés aromatiques d'au moins environ 50 % en poids, l'effluent hydrotraité comprenant une teneur en soufre de 300 ppm en poids ou moins, une teneur en azote de 100 ppm en poids ou moins, ou une combinaison correspondante ;
séparation de l'effluent hydrotraité pour former au moins une fraction de plage d'ébullition des carburants, une première fraction possédant un point de distillation T₅ d'au moins 370 °C, et une deuxième fraction possédant un point de distillation T₅ d'au moins 370 °C, la deuxième fraction possédant une viscosité cinématique à 100 °C supérieure à celle de la première fraction ;
hydrotraitement d'au moins une partie de la première fraction dans des deuxièmes conditions efficaces d'hydrotraitement, les deuxièmes conditions efficaces d'hydrotraitement comprenant des conditions de déparaffinage catalytique, pour former un premier effluent catalytiquement déparaffiné comprenant une portion 370 °C+ possédant une première viscosité cinématique à 100 °C ; et
hydrotraitement d'au moins une partie de la deuxième fraction dans des troisièmes conditions efficaces d'hydrotraitement, les troisièmes conditions efficaces d'hydrotraitement comprenant des conditions de déparaffinage catalytique, pour former un deuxième effluent catalytiquement déparaffiné comprenant une partie 370 °C+ possédant une deuxième viscosité cinématique à 100 °C qui est supérieure à la première viscosité cinématique à 100 °C,
les deuxièmes conditions efficaces d'hydrotraitement étant différentes des troisièmes conditions efficaces d'hydrotraitement.

2. Procédé selon la revendication 1, la composition de précurseur de catalyseur étant traitée tout d'abord avec ledit premier composé organique et deuxièmement avec ledit deuxième composé organique, ou la composition de précurseur de catalyseur étant traitée d'abord avec ledit deuxième composé organique et deuxièmement avec ledit premier composé organique, ou la composition de précurseur de catalyseur étant traitée simultanément avec ledit premier composé organique et avec ledit deuxième composé organique.

3. Procédé selon la revendication 1 ou 2, ledit au moins un métal du groupe 6 étant Mo, W, ou une combinaison correspondante, et ledit au moins un métal des groupes 8 à 10 étant Co, Ni, ou une combinaison correspondante.

4. Procédé selon l'une quelconque des revendications 1 à 3, la composition de précurseur de catalyseur métallique mixte étant une composition de précurseur de catalyseur d'hydrotraitement métallique en masse constituée essentiellement du produit de réaction, une forme d'oxyde de l'au moins un métal du groupe 6, une forme d'oxyde de l'au moins un métal des groupes 8 à 10, et éventuellement environ 20 % en poids ou moins d'un liant.

5. Procédé selon l'une quelconque des revendications ci-dessus, comprenant en outre au moins l'un parmi :
a) une extraction au solvant d'au moins une partie du deuxième effluent catalytiquement déparaffiné pour former un effluent traité au solvant, ou
b) un déparaffinage au solvant d'au moins une partie du deuxième effluent catalytiquement déparaffiné pour former un effluent traité au solvant,
l'effluent traité au solvant comprenant un point de distillation T5 d'au moins 482 °C, un VI d'au moins 80, un point d'écoulement de -6 °C ou moins, et un point de troubles de -2 °C ou moins.

6. Procédé selon l'une quelconque des revendications ci-dessus, le procédé comprenant en outre le recyclage d'au moins une partie de a) la troisième fraction, b) la quatrième fraction, c) le premier effluent catalytiquement déparaffiné, d) la première fraction, e) la deuxième fraction, ou f) une combinaison d'une pluralité de a) à e), comme partie de i) l'au moins une partie de l'huile désasphaltée, ii) l'au moins une partie de la première fraction, iii) l'au moins une partie de la deuxième fraction, ou iv) une combinaison d'une pluralité de i), ii), et iii).

7. Procédé selon l'une quelconque des revendications ci-dessus, le rendement d'huile désasphaltée étant d'au moins 55 % en poids ; ou l'huile désasphaltée possédant une teneur en composés aromatiques d'au moins 55 % en poids sur la base d'un poids de l'huile désasphaltée ; ou une combinaison correspondante.

8. Procédé selon l'une quelconque des revendications ci-dessus, une conversion combinée de la matière première sur l'ensemble des premières conditions efficaces d'hydrotraitement et des deuxièmes conditions efficaces d'hydrotraitement étant d'au moins 70 % en poids relatif à 370 °C, le deuxième effluent catalytiquement déparaffiné possédant un indice de viscosité d'au moins 90 ; ou une conversion combinée de la matière première sur l'ensemble des premières conditions efficaces d'hydrotraitement et des troisièmes conditions efficaces d'hydrotraitement étant d'au moins 70 % en poids relatif à 370 °C, le troisième effluent catalytiquement déparaffiné et/ou la quatrième fraction possédant un indice de viscosité d'au moins 90 ; ou une combinaison correspondante.

9. Procédé selon l'une quelconque des revendications ci-dessus, la séparation de l'effluent hydrotraité comprenant en outre la formation d'une fraction supplémentaire possédant un point de distillation T₅ d'au moins 370 °C, le procédé comprenant en outre :
l'hydrotraitement d'au moins une partie de la fraction supplémentaire dans des troisièmes conditions efficaces d'hydrotraitement, les troisièmes conditions efficaces d'hydrotraitement comprenant des conditions de déparaffinage catalytique, pour former un troisième effluent catalytiquement déparaffiné comprenant une partie 370 °C+ possédant une viscosité cinématique à 100 °C de 3,5 cSt ou plus.

10. Procédé selon l'une quelconque des revendications ci-dessus, au moins une partie de la première fraction, au moins une partie de la deuxième fraction, au moins une partie du premier effluent catalytiquement déparaffiné, au moins une partie du deuxième effluent catalytiquement déparaffiné, ou une combinaison correspondante étant utilisée comme une alimentation pour un vapocraqueur, ou au moins une partie du deuxième effluent catalytiquement déparaffiné étant utilisée comme un composant de mélange d'asphalte.

11. Utilisation d'une composition de catalyseur métallique mixte pour la préparation d'une huile de base lubrifiante par :
chauffage d'une composition comprenant au moins un métal du groupe 6 du tableau périodique des éléments, au moins un métal des groupes 8 à 10 du tableau périodique des éléments, et un produit de réaction formé à partir de (i) un premier composé organique contenant au moins un groupe amine, et (ii) un deuxième composé organique distinct dudit premier composé organique et contenant au moins un groupe acide carboxylique à une température d'environ 195 °C à environ 260 °C pendant un temps suffisant pour que les premier et deuxième composés organiques forment un produit de réaction *in situ* qui contient un groupement amide, des atomes de carbone insaturés n'étant pas présents dans les premier ou deuxième composés organiques, des atomes d'oxygène n'étant pas présents dans les premier ou deuxième composés organiques, ou une combinaison correspondante ;
sulfuration de la composition de précurseur de catalyseur métallique mixte pour former un catalyseur métallique mixte sulfuré ; et
formation d'une composition de catalyseur métallique mixte comprenant le catalyseur métallique mixte sulfuré ;
réalisation d'un désasphaltage au solvant, éventuellement à l'aide d'un solvant C₄₊, dans des conditions efficaces de désasphaltage au solvant sur une matière première possédant un point d'ébullition T5 d'au moins environ 370 °C, les conditions efficaces de désasphaltage au solvant produisant un rendement d'huile désasphaltée d'au moins environ 50 % en poids de la matière première ;
et l'utilisation comprenant l'utilisation du catalyseur métallique mixte pour l'hydrotraitement de l'huile désasphaltée.
